# EUROPÄISCHE PATENTSCHRIFT

(11) **EP 4 446 255 B1**
(45) Veröffentlichungstag und Bekanntmachung des Hinweises auf die Patenterteilung: **24.09.2025**
(21) Anmeldenummer: 23167571.1
(22) Anmeldetag: 12.04.2023
(51) Int. Cl.: B65G 1/137, B65G 47/48

(54) **HÄNGEFÖRDERER FÜR DAS ZUSAMMENSTELLEN VON ARTIKELN ZU SORTIERAUFTRÄGEN UND ENTSPRECHENDES VERFAHREN**
OVERHEAD CONVEYOR FOR COLLATING ARTICLES INTO SORTING ORDERS AND CORRESPONDING METHOD
CONVOYEUR AÉRIEN POUR ASSEMBLER DES ARTICLES EN ORDRE DE TRI ET PROCÉDÉ CORRESPONDANT

(43) Veröffentlichungstag der Anmeldung: 16.10.2024
(73) Patentinhaber: BEUMER Group GmbH & Co. KG, 59269 Beckum (DE)
(72) Erfinder: Hanaweg, Harald, 8143 Dobl-Zwaring (AT)
(74) Vertreter: Angerhausen, Christoph

(56) Entgegenhaltungen:
- EP-A1- 3 581 524
- EP-A1- 4 122 849
- EP-B1- 3 461 753
- WO-A1-2023/272322
- CH-A1- 714 004
- US-A1- 2020 156 876
- US-A1- 2021 047 127
- US-A1- 2022 332 520

## Beschreibung

Die vorliegende Erfindung geht aus von einem Hängeförderer für das Zusammenstellen von Artikeln zu Sortieraufträgen, mit mehreren entlang einer Förderstrecke des Hängeförderers geführten Transporttaschen zum Aufnehmen von Artikeln, wobei die Transporttasche zwei Seitenwände aufweist, die an dem Boden der Transporttasche lösbar miteinander verbunden sind, wobei die Transporttasche zumindest eine Stellmechanik zum Lösen der am Boden verbundenen Seitenwände voneinander zum Ausbilden einer Entladeöffnung aufweist, und mit einer Beladestation zum Beladen der Transporttasche mit Artikeln, sowie mit einem Sortierzielmodul, welches einen Förderstreckenabschnitt mit mehreren daran angeordneten Sortierzielen zum jeweiligen dortigen Abladen eines Sortierauftrags aufweist sowie mit einer Steuereinrichtung mit einem Speicher, in welchem für die Transporttasche und/oder den zumindest einen in der Transporttasche befindlichen Artikel ein Soll-Sortierziel zum Entladen der Transporttasche hinterlegt ist. Ein derartiger Hängeförderer ist bereits bekannt aus der Druckschrift US 2020/156876 A1. Weitere Hängeförderer sind außerdem bekannt aus den Druckschriften US 2021/047127 A1, EP 4 122 849 A1, WO 2023/272322 A1, CH 714 004 A1, US 2022/332520 A1, EP 3 461 753 B1, EP 3 581524 A1 und DE 10 2018 209 266 A1. EP 4 122 749 A1 offenbart den Oberbegriff des Anspruchs 1 sowie ein Verfahren zum Betreiben eines Hängeförderers zum Zusammenstellen von Artikeln zu Sortieraufträgen, wobei mit Leseeinrichtungen entlang eines Transportweges einer Hängeförderanlage Identifikationsdaten erfasst werden können, um einen Förderweg der Tragevorrichtungen entlang der Hängeförderanlage nachzuverfolgen und zu steuern.

Der aus dem Stand der Technik bekannte Hängeförderer weist jedoch den Nachteil auf, dass das Entladen der Taschen über entlang des Förderstreckenabschnitts ortsfest installierten Öffnungseinrichtungen bzw. Entladestationen erfolgt, bei welchem das Öffnen der Taschen über einen von außen auf diese einwirkenden Mechanismus bewirkt ist.

Es ist daher die Aufgabe der Erfindung, den aus dem Stand der Technik bekannten Hängeförderer derart weiterzuentwickeln, dass der konstruktive Aufwand für die Taschenentladung verringert und ein flexibleres Entladen der Taschen ermöglicht wird. Die Aufgabe wird gelöst mit den Merkmalen der unabhängigen Ansprüche. Vorteilhafte Ausgestaltungen sind jeweils in den Unteransprüchen angegeben.

Demgemäß ist vorgesehen, dass der Hängeförderer eine Positionsbestimmungseinrichtung zum Bestimmen der Ist-Position von zumindest einer Transporttasche entlang des Förderstreckenabschnitts aufweist, wobei die Transporttasche zum selbsttätigen Entladen von Artikeln eingerichtet ist und der Boden mittels eines in der Transporttasche angeordneten Betätigungsmittels öffenbar ist und so angesteuert ist, dass bei Übereinstimmung der Ist-Position mit dem Soll-Sortierziel der zumindest eine in der Transporttasche enthaltene Artikel selbsttätig entladen wird, indem das Betätigungsmittel dazu eingerichtet ist, in Reaktion auf eine seitens der Steuereinrichtung ausgesendete Taschenöffnungsinformation die zumindest eine Stellmechanik so zu betätigen, dass der Boden geöffnet wird.

Das Soll-Sortierziel kann insbesondere eines der mehreren Sortierziele sein, welches zumindest einer oder mehrere Artikel zugeordnet sind, welche gemeinsam einen Verpackungsauftrag bilden, wobei der eine oder die mehreren Artikel mittels einer oder mehrerer Transporttaschen transportiert werden können. Somit ist auch jeder Transporttasche, welche mit entsprechenden Artikeln beladen ist, ein bestimmtes Soll-Sortierziel zugeordnet. Ferner kann mehreren Taschen, welche mehrere Artikel desselben Auftrags transportieren, dasselbe Sortierziel zugeordnet sein.

Selbsttätiges Entladen im Sinne der Erfindung kann insbesondere bedeuten, dass die Tasche mit eigenen mechanischen Mitteln, das heißt, ohne äußere mechanische Beeinflussung, in der Lage ist, den den Taschenboden verschließenden Schließmechanismus zu Öffnen.

Das Betätigungsmittel kann einen Aktor zum Betätigen der zumindest einen Stellmechanik aufweisen. Ferner kann die Tasche ein in der Tasche angeordnetes Steuergerät aufweisen, welches dazu eingerichtet sein kann, bei Erhalt der Taschenöffnungsinformation den Aktor so anzusteuern, dass durch diesen die zumindest eine Stellmechanik betätigt und der Taschenboden geöffnet wird.

Ergänzend oder alternativ kann vorgesehen sein, dass das Betätigungsmittel einen mit dem Steuergerät der Tasche verbundenen Speicher zum Speichern von zumindest einer vorbestimmten Taschenposition zum Öffnen der Tasche, beispielsweise die eines Soll-Sortierziels, aufweist. Ferner kann die Positionsbestimmungseinheit zum Bestimmen der derzeitigen Taschenposition in der Tasche angeordnet sein. Das Steuergerät kann bei dieser Alternative dazu eingerichtet sein, bei Feststellen des Erreichens der zumindest einen vorbestimmten Taschenposition zum Öffnen der Tasche mittels der Positionsbestimmungseinheit den Aktor so anzusteuern, dass durch diesen die zumindest eine Stellmechanik betätigt und der Taschenboden geöffnet wird. In diesem Fall kann das erfindungsgemäße Datensignal durch das Übereinstimmen der Taschen Ist-Position mit der zumindest einen vorbestimmten Taschenposition zum Öffnen der Tasche ausgegeben werden. Bei dieser Alternative kann vorgesehen sein, dass das Taschensteuergerät im Zuge des Beladens mit einem Artikel dessen zugeordnetes Soll-Sortierzielübermittelt bekommt, beispielsweise seitens der zentralen Steuerungseinrichtung des Hängeförderers.

Ferner kann vorgesehen sein, dass die zumindest eine Stellmechanik zumindest ein Schließmittel aufweist, welches zum automatischen Verschließen des Taschenbodens nach Entladen von in der Tasche transportierter Ware eingerichtet ist bzw. sobald die Seitenwände der Tasche nach dem Entladen wieder aneinander angenähert sind.

Es ist denkbar, dass der Taschenboden von einer Kupplung gebildet ist, mit der die Seitenwände lösbar miteinander verbunden sind, wobei jede Seitenwand eine von zwei Kupplungshälften der Kupplung aufweist. Die Kupplungshälften können als starre Leisten ausgebildet sein und sich im Wesentlichen längs der unteren Kante der jeweiligen Seitenwand erstrecken. Es kann vorgesehen sein, dass nur in einer der beiden Kupplungshälfte der Aktor und die Steuereinheit angeordnet sind und die andere Kupplungshälfte keine mechanisch verstellbaren Bauteile aufweist.

Die zumindest eine Stellmechanik kann zwischen einer Schließposition, in der die Kupplungshälften, insbesondere formschlüssig, aneinander festgelegt sind, und einer Freigabeposition, in der die Kupplungshälften voneinander gelöst sind, verstellbar sein. Ferner kann zumindest eine Stellmechanik ein durch den Aktor angesteuertes Betätigungsende aufweisen. Der Aktor kann mit dem Betätigungsende permanent gekoppelt sein oder an dieses derart anlenkbar sein, dass der Aktor in einem Betätigungszustand, also beispielsweise während des Überführens der Stellmechanik von der Schließposition in die Freigabeposition, an dem Betätigungsende anliegt, und außerhalb des Betätigungszustands von diesem separiert ist.

Das Schließmittel kann eine Rückstellfeder zum Rücküberführen der Stellmechanik in die Schließposition aufweisen. Die Wirkrichtung der Rückstellfeder kann der Wirkrichtung des Aktors entgegengesetzt sein.

Es kann vorgesehen sein, dass die zumindest eine Stellmechanik in einer der Kupplungshälften aufgenommen ist und das Betätigungsmittel in derselben oder der anderen der Kupplungshälften aufgenommen ist.

Darüber hinaus kann dem Betätigungsmittel ferner ein elektrischer Energiespeicher zum Versorgen des Betätigungsmittels mit elektrischer Energie zugeordnet sein. Der elektrische Energiespeicher kann ebenfalls in einer der Kupplungshälften angeordnet sein. Der elektrische Energiespeicher kann als Akku oder als Kondensator ausgebildet sein. Der Akku kann zum kontaktlosen, insbesondere induktiven, Laden ausgebildet sein. Die Ladekapazität des Energiespeichers kann so bemessen sein, dass diese für zumindest eine Taschenöffnung ausreicht.

Die am Taschenboden angeordnete Kupplung kann zwei, insbesondere gegenläufige, Stellmechaniken, mit jeweils einem Magnetschieber, aufweisen, und das Betätigungsmittel kann zwei Aktoren aufweisen, von welchen einer der ersten Stellmechanik und der andere der zweiten Stellmechanik zugeordnet ist. Dabei kann das Betätigungsmittel zwischen der ersten und der zweiten Stellmechanik angeordnet sein, wobei der erste der Aktoren in Richtung der ersten Stellmechanik und der zweite der Aktoren in die entgegengesetzte Richtung bzw. in Richtung der zweiten Stellmechanik wirkt. Die Aktoren, beispielsweise Hubmagnete, können dabei in entgegengesetzte Richtungen wirken, so dass die Aktoren beide entweder aufeinander zuziehend oder voneinander wegdrückend wirken.

Es kann vorgesehen sein, dass die Seitenwände jeweils mindestens ein magnetisches Element aufweisen, die einander anziehen, wobei das magnetische Element einer ersten der beiden Seitenwände ein Permanentmagnet und das magnetische Element einer zweiten der beiden Seitenwände ein ferromagnetisches Metall oder ein Permanentmagnet mit in Bezug auf den Permanentmagnet der ersten der beiden Seitenwände entgegengesetzter Polung ist. Beispielsweise können die Kupplungshälften jeweils mindestens eines der magnetischen Elemente aufweisen, wobei die magnetischen Elemente über die Stellmechanik relativ zueinander verstellbar und in der Schließposition relativ zu der Freigabeposition weiter einander angenähert sind. Ferner können die Kupplungshälften jeweils mindestens ein magnetisches Element, vorzugsweise einen Permanentmagnet, aufweisen, die gleich gepolt und in der Freigabeposition relativ zu der Schließposition weiter einander angenähert und vorzugsweise mit ihren gleichen Polen sich gegenüberstehend angeordnet sind.

Ferner kann die Stellmechanik mindestens einen Magnetschieber aufweisen, an dem das mindestens eine magnetische Element, vorzugsweise ein Permanentmagnet, in einer der beiden Kupplungshälften angeordnet ist, wobei mit dem Magnetschieber ein Abstand dieses magnetischen Elements in Bezug auf das mindestens eine magnetische Element der anderen Kupplungshälfte verstellbar ist. Der Magnetschieber kann weiterhin einen Haken oder eine zu dem Haken komplementäre hinterschnittige Hakenaufnahme aufweisen, der/die mit dem Magnetschieber zwischen der Schließposition und der Freigabeposition verstellbar ist. Die den Magnetschieber aufweisende Kupplungshälfte kann sich entlang der Breite des Taschenbodens erstrecken, wobei der Magnetschieber in der Breitenrichtung mit einem Betätigungsende in Richtung des Aktors weist. Ferner kann die Kupplung, wenn zwei Stellmechaniken vorgesehen sind, zwei Magnetschieber aufweisen, die an in Breitenrichtung des Taschenbodens gegenüberliegenden Enden des Taschenbodens in entgegengesetzter Erstreckungsrichtung angeordnet sind. Der Magnetschieber kann in einem Gehäuse der den Magnetschieber aufweisenden Kupplungshälfte aufgenommen sein und zumindest anteilig zu einer Formschlussaufnahme der anderen Kupplungshälfte hin freiliegen. Der Magnetschieber, an dem das mindestens eine magnetische Element einer der beiden Kupplungshälften angeordnet ist, kann in der Freigabeposition eine mechanische Vorspannung in Richtung der Schließposition aufweisen. Die Kupplung kann einen Formschlussabschnitt aufweisen, in dem die beiden Kupplungshälften mit zueinander komplementären Konturen ineinandergreifen, wobei der Formschlussabschnitt zwischen der Stellmechanik und den Seitenwänden angeordnet sein kann. Der Formschlussabschnitt kann eine sich in Breitenrichtung des Taschenbodens erstreckende Nut an einer ersten der beiden Kupplungshälften und eine sich in Breitenrichtung des Taschenbodens erstreckende, in der Schließposition in die Nut eingreifende Rückstellfeder an der anderen der beiden Kupplungshälften aufweisen. Die Kupplungshälften können sich für die Bereitstellung des Formschlusses im Wesentlichen über die gesamte Breite des Taschenbodens erstrecken.

Es kann vorgesehen sein, dass die Steuerungseinrichtung eine zentrale Steuerungseinrichtung des Hängeförderers ist. Diese kann dazu eingerichtet sein, Sortieraufträge zu generieren und zu verwalten. Dazu kann diese die für den jeweiligen Sortierauftrag vorgesehenen Artikel lokalisieren, beispielsweise im Lager oder im dynamischen Puffer, in welchen Artikel-Rückläufer eingespeist werden, und diese an den jeweiligen Stellen anfordern. Ferner kann die Steuerungseinrichtung jedem Sortierauftrag ein verfügbares Sortierziel eines Sortierzielmoduls zuordnen, und dieses im Zuge dessen als Soll-Sortierziel festlegen. Es kann vorgesehen sein, dass die Steuerungseinrichtung beim Beladen einer Transporttasche, welche eine Kennung aufweisen kann, eine Zuordnungsinformation zwischen der Transporttaschenkennung und dem zumindest einen in diese geladenen Artikel speichert und dadurch die Information erhält, welcher Artikel eines Sortierauftrags sich bereits auf dem Hängeförderer befindet und in welcher Tasche dieser transportiert wird. Die Steuerungseinrichtung kann ferner mit der Positionsbestimmungseinrichtung verbunden sein und darüber Echtzeit-Positionsinformationen zu jeder auf dem Hängeförderer befindlichen Tasche bzw. anhand der abgespeicherten Zuordnungsinformation zu jedem auf dem Hängeförderer transportierten Artikel erhalten. Die Steuerungseinrichtung kann ferner dazu eingerichtet sein, eine Transporttasche durch eine Taschenöffnungsinformation anzusteuern, wenn diese ein vorbestimmtes Soll-Sortierziel erreicht hat oder sich diesem nähert. Die Tasche kann in Reaktion auf die Taschenöffnungsinformation selbsttätig das Öffnen des Taschenbodens veranlassen, insbesondere durch Auslösen des Aktors zum Betätigen der Stellmechanik. Die Steuereinrichtung kann dazu eingerichtet, mehrere Artikel desselben Sortierauftrags demselben Soll-Sortierziel zuzuweisen.

Die Transporttasche kann eine Drahtloskommunikationsschnittstelle, insbesondere einen Empfänger, aufweisen, über welche die Transporttasche zum Entladen des zumindest einen Artikel seitens der Steuereinrichtung ansteuerbar ist. Die Transporttasche kann ferner einen elektrischen Energiespeicher, wie beispielsweise einen Akku oder einen Kondensator, zum Betreiben der in der Transporttasche angeordneten elektrischen und elektronischen Komponenten aufweisen.

Es kann vorgesehen sein, dass die zumindest eine Transporttasche eine Kennung aufweist, welche im Speicher der Steuereinrichtung des Hängeförderers hinterlegt ist, wobei die Steuereinrichtung zum temporären Speichern einer Zuordnung der Kennung zu dem zumindest einen in der Transporttasche befindlichen Artikel eingerichtet ist. So kann im Zuge jedes Taschenbeladevorgangs die entsprechende Zuordnung der Taschenkennung zu dem in die Tasche geladenen Artikel hergestellt und temporär im Speicher der Steuerungseinrichtung hinterlegt werden, beispielsweise so lange, bis die Tasche an dem ihr zugewiesenen Soll-Sortierziel entladen wurde. Danach kann die betreffende Tasche-zu-Artikel-Zuordnung gelöscht werden bzw. bei erneutem Beladen der Tasche mit einem anderen Artikel überschrieben werden.

Es kann vorgesehen sein, dass an jedem der Sortierziele ein Aufnahmebehälter positioniert ist, in welchen die Artikel aus den Transporttaschen abgegeben werden können. Die Behälter können jedwedes geeignete Mittel zum Aufnehmen einer Mehrzahl von Artikeln sein, beispielsweise Kartons, Rollbehälter etc.

Die Aufnahmebehälter können jeweils eine Kennung, beispielsweise gekennzeichnet durch einen RFID-Chip, aufweisen, welche im Speicher der Steuereinrichtung hinterlegt sind und die Steuereinrichtung dazu eingerichtet sein kann, die jeweiligen Soll-Sortierziele automatisch anhand der Abstellorte der Aufnahmebehälter einzustellen.

Es kann vorgesehen sein, dass sich die Aufnahmebehälter bei der Artikelübergabe in Bewegung befinden und der Hängeförderer die Aufnahmebehälter für das Entladen der Taschen mit einer Relativgeschwindigkeit passiert. Dabei können die Bewegungsrichtungen des Hängeförderers und der Aufnahmebehälter im Wesentlichen gleich sein und der Hängeförderer mit einer größeren Geschwindigkeit bewegt werden als die Aufnahmebehälter, so dass die entladenen Artikel gezielt in die vorgesehenen Aufnahmebehälter abgeworfen werden können. Dabei kann die Abgabe der Artikel auf Basis von Gewicht, Größe, Volumen etc. bei dem Abwurfzeitpunkt berücksichtigt werden, um somit ein Treffen des Aufnahmebehälters zu gewährleisten. Beispielsweise hat eine Winterjacke ein anderes Fallverhalten als beispielsweise Schuhe. Ferner kann die Geschwindigkeit des Sorters miteinbezogen werden. Hierbei kann auch ein Algorithmus auf Basis von künstlicher Intelligenz berücksichtigt werden.

Ferner kann das Sortierzielmodul mehrere autonome mobile Roboter zum Entfernen von einen vollständigen Auftrag aufweisenden Aufnahmebehälter von eines jeweiligen Sortierziels und zum Ersetzen dieses durch einen leeren Aufnahmebehälter aufweisen. Dabei ist beispielsweise denkbar, dass der Auftrag noch nicht vollständig ist, aber durch eine entsprechende Sensorik erfasst wird, dass der Aufnahmebehälter voll ist, so dass für den laufenden Auftrag ein weiterer Aufnahmebehälter verwendet werden muss. Es kann auch eine Überwachung des Füllgrads des Aufnahmebehälters vorgesehen sein und ein automatischer Abtransport des Behälters erfolgen, wenn dieser gefüllt ist. Ferner kann ein Überwachungssystem vorgesehen sein, das vor einem Abtransport eines Rollbehälters ermittelt bzw. währenddessen sicherstellt, dass kein notwendiger Abwurf von Artikeln in dem Zeitraum des Aufnahmebehälterwechsels stattfindet. Beispielsweise kann das Überwachungssystem ein Signal aussenden, dass in dem Fall der Artikel nicht abgeworfen werden soll, sondern die Transporttasche eine weitere Runde im System drehen muss. Beispielsweise können die Aufnahmebehälter selbst jeweils einen fest damit verbundenen autonomen mobilen Roboter aufweisen oder dazu eingerichtet sein, mittels eines autonomen mobilen Roboters verfahren werden zu können. Beispielsweise können die Behälter Rollen aufweisen und mittels des autonomen mobilen Roboters gezogen und/oder geschoben werden. Der Behälter kann alternativ selbst auch ohne Rollen ausgebildet sein. Dazu kann der Rollbehälter aufgebockt sein, so dass ein autonomer mobiler Roboter in einen Freiraum unter dem Behälter fahren kann. Zum Transportieren kann das der autonome mobile Roboter eine Hubeinheit aufweisen, mittels welcher der Behälter angehoben werden kann. Der Behälter kann beispielsweise über eine Mehrzahl Stelzen aufgebockt sein. Die durch die Stelzen bereitgestellte Aufstandsfläche kann größer sein als ein Querschnitt des Behälters. Dadurch kann ein Umkippen des Behälters während des Handlings vermieden werden. Die Hubvorrichtung kann durch einen Teller an der Oberseite des autonomen mobilen Roboters ausgebildet sein oder beispielsweise Gabelzinken aufweisen, welche in den Freiraum eingreifen können. Der Behälter kann eine seitliche Entladeklappe aufweisen, welche an einem oberen Rand einer der Behälterwände anscharniert sein kann, so dass die Entladeklappe um eine horizontale Achse nach oben aufgeschwenkt werden kann. Der Behälterboden kann eine in Richtung der Entladeklappe ausgerichtete Schräge aufweisen, beispielsweise zwischen 20 und 30 Grad, so dass beim Öffnen der Entladeöffnung im Behälter befindliche Artikel automatisch aus dem Behälter rutschen können.

Die Sortierziele können alternativ auch als manuelle Arbeitsplätze ausgebildet sein und jeweils eine Rutsche aufweisen, auf welche die Artikel aus den Transporttaschen abgeladen werden können und entlang welcher die Artikel in Richtung eines Arbeitsbereichs des manuellen Arbeitsplatzes rutschen können. Die Rutschen können einen ersten schrägen Abschnitt, insbesondere mit einem über die Erstreckungslänge des Abschnitts konstantem Winkel, aufweisen. Dieser erste Abschnitt kann dazu dienen, einen aus einer Tasche entladenen Artikel zu empfangen und diesen an den Arbeitsbereich zu übergeben. Der Arbeitsbereich kann im Wesentlichen horizontal ausgebildet sein, so dass bei diesem ankommende Artikel dort liegenbleiben. Der Arbeitsbereich kann in Richtung eines an diesem arbeitenden Arbeiters zugänglich sein.

Der Hängeförderer kann ferner mehrere parallel betriebene Sortierzielmodule und ferner eine den Sortierzielmodulen vorgeschaltete Zuordnungsmatrix aufweisen, welche dazu eingerichtet sein kann, beladene Transporttaschen in einer beliebigen Reihenfolge aufzunehmen und die beladenen Transporttaschen definiert an ein einem einer jeweiligen Transporttasche zugeordneten Sortierziel aufweisendes Sortierzielmodul abzugeben. Demgemäß werden zunächst sämtliche Taschen, unabhängig vom vorgesehenen Sortierzielmodul, in die Zuordnungsmatrix eingespeist. Die Zuordnungsmatrix erhält dann zu jeder darauf befindlichen Tasche seitens der Steuerungseinrichtung die Information, zu welchem Sortierzielmodul die jeweilige Tasche auszuschleusen ist. Die Zuordnungsmatrix weist dazu zumindest eine Weiche auf, mittels welcher die Taschen zu den zumindest zwei nachgeschalteten Sortierzielmodulen ausgeschleust werden können.

Es kann vorgesehen sein, dass die Anordnung des die Sortierziele aufweisenden Förderstreckenabschnitts mäanderförmig ist, und die Sortierziele jeweils von zumindest einer Seite durch einen autonomen mobilen Roboter zugänglich sind. Jeder Mäander kann dabei zwei gegenläufig laufende Streckenteile des Förderstreckenabschnitts aufweisen, welche unmittelbar aneinander grenzen. Ein benachbarter entsprechender Mäander kann hingegen vom ersten Mäander beabstandet sein, so dass im dadurch gebildeten Zwischenraum autonome mobile Roboter verfahren werden können oder für Personal zugänglich sind.

Die Erfindung betrifft ferner ein Verfahren zum Betreiben eines Hängeförderers zum Zusammenstellen von Artikeln zu Sortieraufträgen, aufweisend die Schritte:
Definieren eines an einem verfügbaren Soll-Sortierziel eines Sortierzielmoduls abzuladenden Sortierauftrags, welcher aus zumindest einem Artikel besteht, wobei das Sortierzielmodul einen Förderstreckenabschnitt mit mehreren daran angeordneten Sortierzielen zum jeweiligen dortigen Abladen eines Sortierauftrags aufweist;
Beladen zumindest eines Artikels eines Sortierauftrags in eine Transporttasche des Hängeförderers, wobei die Transporttasche zum selbsttätigen Entladen des oder der Artikel eingerichtet ist, wobei die Transporttasche einen mittels eines in der Transporttasche angeordneten Betätigungsmittels öffenbaren Boden aufweist;
Zuordnen der den zumindest einen Artikel des Sortierauftrags aufweisenden Transporttasche zu dem entsprechenden Soll-Sortierziel;
Fördern der beladenen Transporttasche entlang des Förderstreckenabschnitts des Sortierzielmoduls;
Bestimmen der Ist-Position der Transporttasche entlang des Förderstreckenabschnitts mittels einer Positionsbestimmungseinrichtung;
Abgleichen der Ist-Position mit der Position des Soll-Sortierziels;
Ansteuern der Transporttasche zum selbsttätigen Entladen des zumindest einen Artikels, wenn die Ist-Position mit der Position des Soll-Sortierziels übereinstimmt.

Das Ansteuern der Transporttasche kann beispielsweise mittels Drahtloskommunikation seitens der zentralen Steuerungseinrichtung des Hängeförderers an einen Empfänger bzw. ein Steuergerät der Transporttasche erfolgen. Das Ansteuern kann alternativ durch das Steuergerät der Transporttasche erfolgen, sofern die Soll-Sortierziele in diesem gespeichert ist und die Transporttasche entweder selbst zum Bestimmen ihrer derzeitigen Ist-Position entlang des Förderstreckenabschnitts des Sortierzielmoduls eingerichtet ist oder diese Information über Drahtloskommunikation seitens der zentralen Steuerungseinrichtung erhält, so dass die Transporttasche zum Abgleichen der Soll-Position mit der Ist-Position in der Lage ist, und zum gegebenen Zeitpunkt den Öffnungsmechanismus betätigen kann.

Das Verfahren kann ferner die Schritte aufweisen:
Feststellen, wenn sämtliche Artikel eines Sortierauftrags an dem vorgesehenen Soll-Sortierziel abgeladen wurden; und
Ausgeben eines die Vollständigkeit des Sortierauftrags anzeigenden und das betreffende Soll-Sortierziel kennzeichnenden Signals und/oder Entfernen eines an dem Soll-Sortierziel positionierten Aufnahmebehälters, in welchen die Artikel abgeladen wurden, und Ersetzen des Behälters durch einen leeren Aufnahmebehälters mittels eines autonomen mobilen Roboters.

Das Ansteuern der Transporttasche zum Entladen des zumindest einen Artikels kann beispielsweise von einer zentralen Steuereinrichtung des Hängeförderers ausgegeben wird.

Es ist ferner denkbar, dass zumindest zwei Sortierzielmodule vorgesehen sind, wobei das Verfahren dabei ferner die folgenden Schritte aufweisen kann:
Zuordnen von einer ersten Mehrzahl von Sortieraufträgen zum ersten Sortierzielmodul und Zuordnen von einer zweiten Mehrzahl von Sortieraufträgen zum zweiten Sortierzielmodul;
Einschleusen der ersten und der zweiten Mehrzahl von Sortieraufträgen in eine Zuordnungsmatrix;
Ausschleusen der der ersten Mehrzahl von Sortieraufträgen entsprechenden Transporttaschen aus der Zuordnungsmatrix zum ersten Sortierzielmodul und Ausschleusen der der zweiten Mehrzahl von Sortieraufträgen entsprechenden Transporttaschen aus der Zuordnungsmatrix zum zweiten Sortierzielmodul.

Das Verfahren kann ferner das Fördern von entladenen Transporttaschen in einen Taschenpuffer und Bereitstellen der im Taschenpuffer gespeicherten Transporttaschen zum erneuten Beladen mit Artikeln umfassen.

Weitere Einzelheiten der Erfindung werden anhand der nachstehenden Figuren erläutert. Dabei zeigt:
- Figur 1: ein funktionelles Ablaufschema einer aus dem Stand der Technik bekannten Sortieranordnung;
- Figur 2: ein schematisches Ablaufschema einer ersten Ausführungsform des erfindungsgemäßen Hängeförderers;
- Figur 3: ein funktionelles Ablaufschema einer zweiten Ausführungsform des erfindungsgemäßen Hängeförderers;
- Figur 4: ein funktionelles Ablaufschema einer dritten Ausführungsform des erfindungsgemäßen Hängeförderers;
- Figur 5: ein funktionelles Ablaufschema einer vierten Ausführungsform des erfindungsgemäßen Hängeförderers;
- Figur 6a: eine beispielhafte Ausführungsform der erfindungsgemäßen Tasche;
- Figur 6b: eine vergrößerte Ansicht des Taschenbodens der erfindungsgemäßen Tasche gemäß Figur 6a;
- Figur 7a: eine Ausführungsform des Taschenbodens in der Freigabeposition der Stellmechanik;
- Figur 7b: die Ausführungsform gemäß Figur 7a mit voneinander abgelösten Kupplungshälften;
- Figur 8a: die Ausführungsform gemäß Figur 7b mit der Stellmechanik in der Schließposition;
- Figur 8b: die Ausführungsform gemäß Figur 8a mit teilweise einander angenäherten Kupplungshälften;
- Figur 8c: die Ausführungsform gemäß Figur 8b mit vollständig einander angenäherten Kupplungshälften.

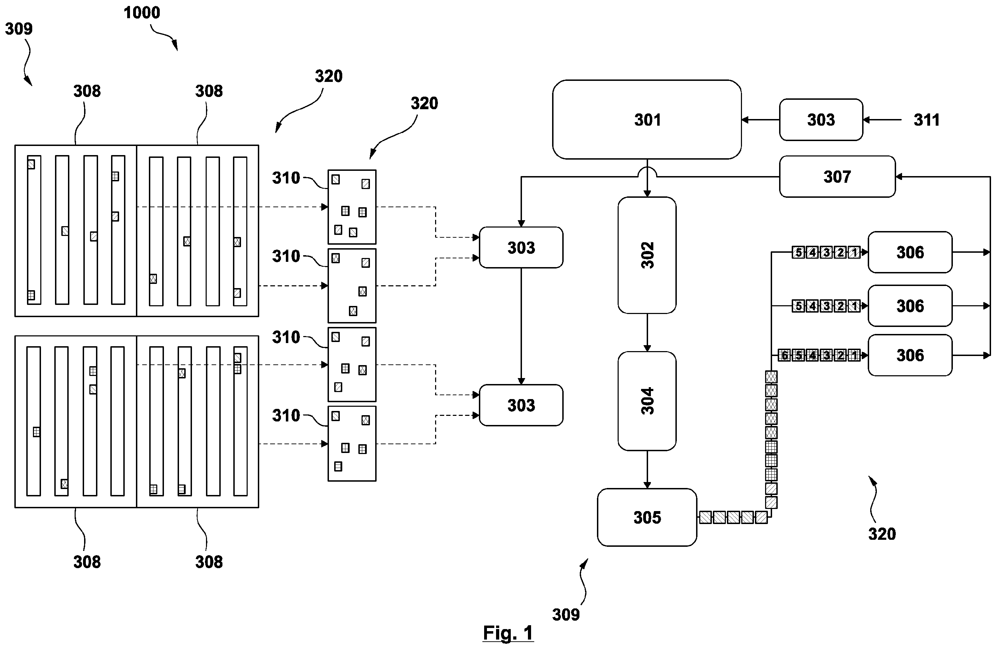

In Figur 1 ist beispielhaft ein funktionelles Ablaufschema einer Sortieranordnung 1000 mit einem aus dem Stand der Technik bekannten Hängeförderer 100 gezeigt. Diese weist im Wesentlichen einen Hängeförderer 100 auf, sowie ein Lager 309, beispielsweise ein Hochregallager, aus welchem einzelne Artikel 320 entnommen und in den Hängeförderer 100 eingespeist werden. Weitere infrage kommende Lager- oder Bereitstellungsarten können beispielsweise durch ein Blocklager, durch Fachbodenregale, Schwerkraftregale, Durchlaufregale, Palettenregale, Kragarmregale, eine Bodenlagerung, Regalbediengeräte, Horizontal-Karussell-Lagerung, Vertikal-Karussell-Lagerung, ein automatisiertes Kleinteilelager, eine Lagercontainer Freilagerung, mobile Regale oder über Shuttle-Systeme realisiert sein. Die Artikel müssen dabei nicht zwangsweise aus einem Lager kommen, sondern können beispielsweise auch aus einer automatischen / manuellen Einschleusung bei der Entladung von Containern / LKW oder auch von einem Sorter kommen. Weiterhin kann die Übergabe der Artikel manuell oder automatisch über eine Schnittstelle mit einem gleich- oder andersartigen Förderer oder Sorter erfolgen. Im Hängeförderer 100 werden die Artikel 320 in einem mehrschrittigen Verfahren sortiert und letzten Endes in einer vorbestimmten Reihenfolge an Packstationen 306 ausgegeben, wo die Einzelartikel 320 entsprechend zu vordefinierten Versandaufträgen verpackt werden. Die Einzelartikel 320 werden dem Lager 309 durch eine Mehrzahl Kommissionierer 308 in Form von entsprechenden Kommissioniereinrichtungen oder in Form von Personal entnommen und die im Zuge dessen entnommenen Einzelartikel 320 jeweils in einem von einer Mehrzahl von Übergabestellen 310 gesammelt und zu einzelnen Auftragsbatches zusammengestellt, welche an den Taschensorter übergeben werden sollen. Über mehrere Beladestationen 303 werden dann die in den Übergabestellen 310 gesammelten Einzelartikel 320 in Taschen 1 des Hängeförderers 100 eingeladen, wobei die Zuordnung jedes Artikels 320 zur jeweiligen Tasche 1 gespeichert wird, solange sich der Artikel 320 auf dem Hängeförderer befindet. Die beladenen Taschen werden anschließend einem dynamischen Batch-Puffer 302 zugeführt, in welchem eine Vorsortierung der Taschen 1 vorgenommen wird. Beispielsweise kann der dynamische Batch-Puffer 302 mehrere Pufferkreise aufweisen, wobei sämtliche Taschen, die als Sortierziel derselben Packstation 306 zugeführt werden sollen, in demselben Pufferkreis vorgehalten werden, bis sie als Gruppe von Taschen mit demselben Sortierziel, etwa auf eine Anforderung hin, aus dem Pufferkreis ausgeschleust werden. Vorzugsweise können in jedem der Pufferkreis mehrere Gruppen von Taschen, die derselben Packstation 306 zugeführt werden sollen bzw. dasselbe Sortierziel aufweisen, aufgenommen, d. h. gepuffert werden. Diese Vorsortierung in dem dynamischen Batch-Puffer 302 kann vollautomatisch anhand mindestens eines Kriteriums erfolgen. Diese Kriterien sind können die Abfahrtzeit, eine Identifikation des Spediteurs, das Gesamtvolumen der Objekte gleichen Versandziels, eine Priorisierung, eine Gewichtsklasse eine Größenklasse und/oder dergleichen betreffen. Dem dynamischen Batch-Puffer 302 ist darüber hinaus ein dynamischer Puffer 301 vorgeschaltet, welcher durch Rückläufer 311 gespeist wird, welche diesem ebenfalls über eine Beladestation 303 zugeführt werden. Es kann vorgesehen sein, dass die Rückläufer 311 dem dynamischen Batch-Puffer 302 priorisiert zugeführt werden, bevor der entsprechende Artikel 320 erneut dem Lager 309 entnommen werden muss. Ferner kann vorgesehen sein, dass jeder der Beladestationen 303 ein separater dynamischer Puffer 301 zugeordnet ist, oder dass ein gemeinsamer dynamischer Puffer 301 für mehrere oder alle der Beladestationen 303 vorgesehen ist.

Die Separierung der Taschen 1 nach ihren Gruppen bzw. Sortierzielen erfolgt in einer dem dynamischen Batch-Puffer 302 fördertechnisch nachgeschalteten Sortiermatrix 304, in welcher die Taschen 1 zugeführt werden. Der Sortiermatrix 304 werden die mehreren vollständigen Gruppen von Taschen 1 desselben Sortierziels in einer willkürlichen Reihenfolge zugeführt. Die Taschen 1 verlassen die Sortiermatrix 304 nach deren Durchlaufen sortenrein, d. h. als ein kompakter Pulk von Taschen 1, wobei sämtliche einer Gruppe von Taschen 1 mit demselben Sortierziel zugeordnete Taschen 1 unmittelbar aufeinanderfolgend aus der Sortiermatrix 304 ausgeschleust werden. Die Sortiermatrix 304 ist ferner dazu eingerichtet, neben der Sortenreinheit zusätzlich eine Reihenfolge der Taschen 1 innerhalb derselben Gruppe herzustellen, mithin eine Sequenzierung der Taschen 1 zu erzeugen. Diese Sequenzierung kann beispielsweise dazu vorgesehen sein, um eine weitere Sortierstufe zu erreichen. Anschließend werden die sequenzierten Taschen 1 einem den Packstationen 306 vorgelagerten Taschenpuffer 305 zugeführt. Auf Anforderung seitens der Packstationen 306 können dabei Gruppen von sequenzierten Taschen, welche beispielsweise demselben Auftrag angehören, aus dem Taschenpuffer 305 ausgeschleust und der den Auftrag anfordernden Packstation 306 zugeführt werden. In den Packstationen 306 werden dann die Artikel 320 nach und nach den ankommenden Taschen 1 entnommen und wie vom Auftrag vorgesehen verpackt. Die leeren Taschen 1 werden dann in einem Leertaschenpuffer 307 zwischengespeichert und können von dort aus erneut den Beladestationen 303 zugeführt werden.

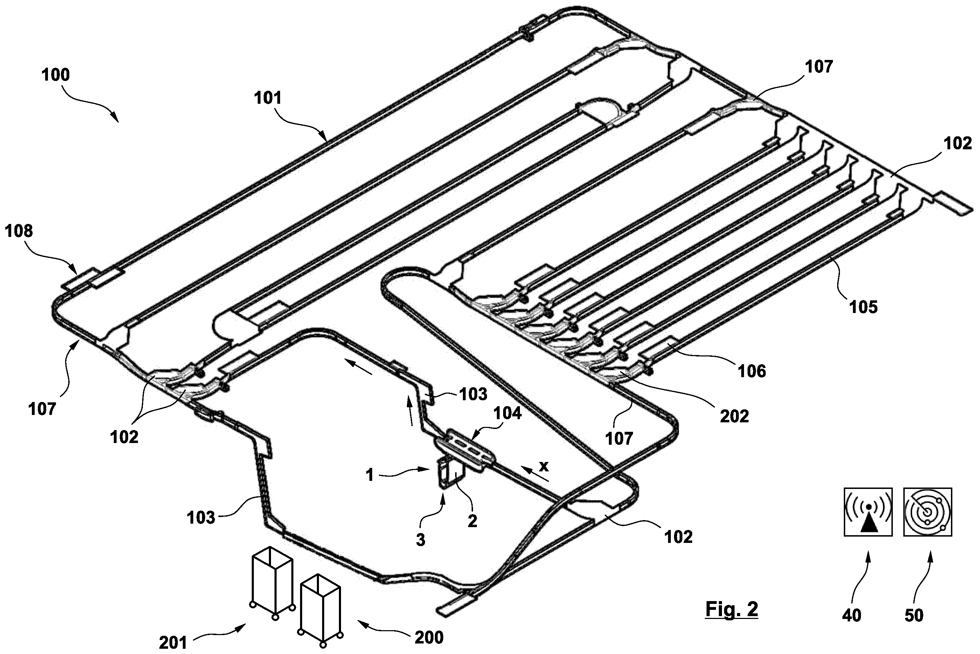

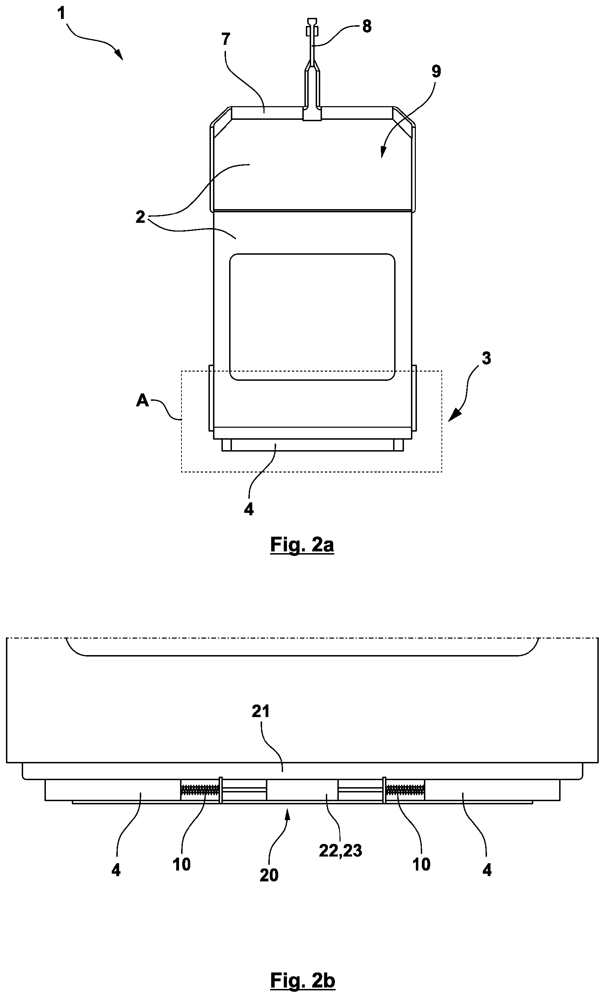

Die Figur 2 zeigt eine beispielhafte erste Ausführungsform des erfindungsgemäßen Hängeförderers 100. Der Hängeförderer 100 besteht im Wesentlichen aus einem System aus Förderschienen 101, die beispielsweise als ein Stauförderer 105 oder als ein Transferförderer 107 ausgebildet sein können. An einem Übergang 108 zwischen einem Stauförderer 105 und einem Transferförderer 107 erfolgt die Übertragung der Taschen 1 zwischen den beiden Transportsystemen. Geeignete Systeme für einen Stauförderer 105 und einen Transferförderer 107 sind in der WO 2020/128941 A1 und in der EP 3670393 A1 beschrieben.

Für die Sequenzierung der Taschen 1, welche entlang der Förderschiene 101 transportiert sind und in einer bevorzugten Reihenfolge und zu einer bevorzugten Zeit beispielsweise einem Entladearbeitsplatz 104 oder an einem frei wählbaren Entladeort 200 beispielweise einer Mehrzahl Rollcontainern 201 zugeführt werden sollen, kann eine Sortierschleife aus einer Mehrzahl parallel zueinander geführter Stauförderer 105, die vorlaufseitig und rücklaufseitig über Weichen 102 an einen Transferförderer 107 angeschlossen sein können, bereitgestellt sein. Zur Verringerung des Footprints der Anlage können Schrägförderer 103 verwendet werden, welche einen mehretagigen Aufbau der Anlage erlauben. Überfüllsensoren 106 entlang der Staufördererstrecken 105 der Sortierschleife detektieren einen Füllstand des betreffenden Stauförderers 105, um durch geeignete Umleitung von der Sortierschleife zugeführter neuer Taschen eine Überfüllung bestimmter Stauförderstrecken 105 zu vermeiden.

Am Be- und/oder Entladearbeitsplatz 104 können die von der Tasche 1 gehaltenen Gegenstände manuell aus der Tasche entfern werden, etwa durch seitlichen Eingriff parallel zu den Seitenwänden 2 der Tasche 1. Demgegenüber kann das Entladen am gewählten Entladeort 200 automatisiert erfolgen. Am entlang der Förderstrecke befindlichen Entladeort 200 können Entladebehälter wie Rollcontainer 201 bereitstehen, in welchen die transportierte Ware entladen werden soll. Die Orte sämtlicher entlang des Hängeförderers 100 transportierter Taschen 1 werden in Echtzeit mittels einer Taschenverfolgungseinrichtung 50 erfasst. Sobald eine zu entladende Tasche 1 den Entladeort 200 erreicht, signalisiert die Taschenverfolgungseinrichtung 50 eine dieses Ereignis betreffende Information an eine Ansteuereinrichtung 40, welche daraufhin ein Öffnungssignal an die fernsteuerbare Betätigungseinrichtung der Tasche übermittelt. Dort wird das Signal mittels des Empfängers erhalten und an das Steuergerät übermittelt, welches daraufhin den Aktor zum Öffnen der Öffnungseinrichtung ansteuert. Dadurch wird der Taschenboden 3 geöffnet und die Waren in die dafür vorgesehenen Rollcontainer 201 entladen.

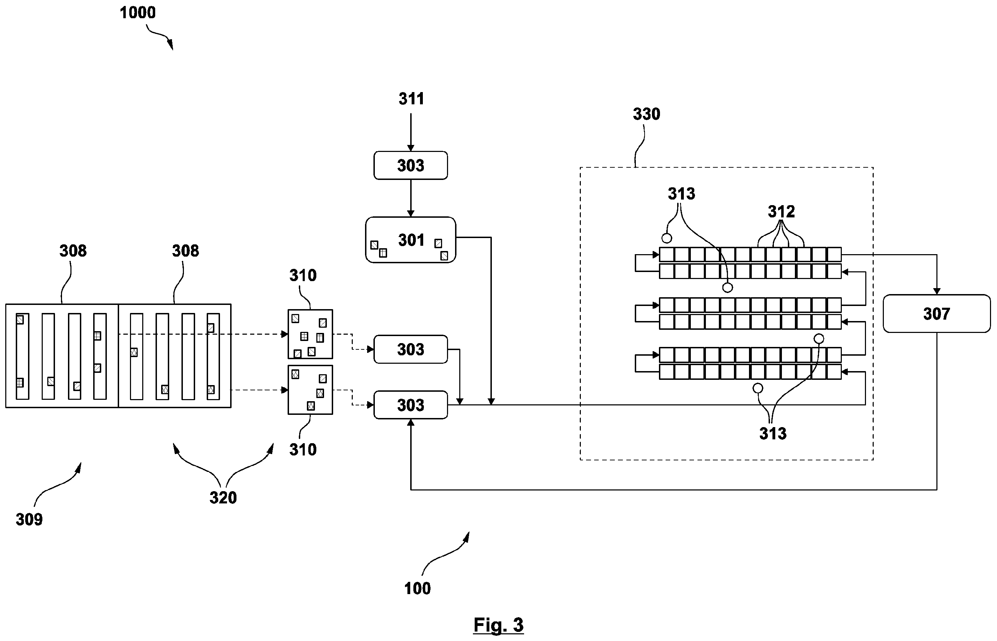

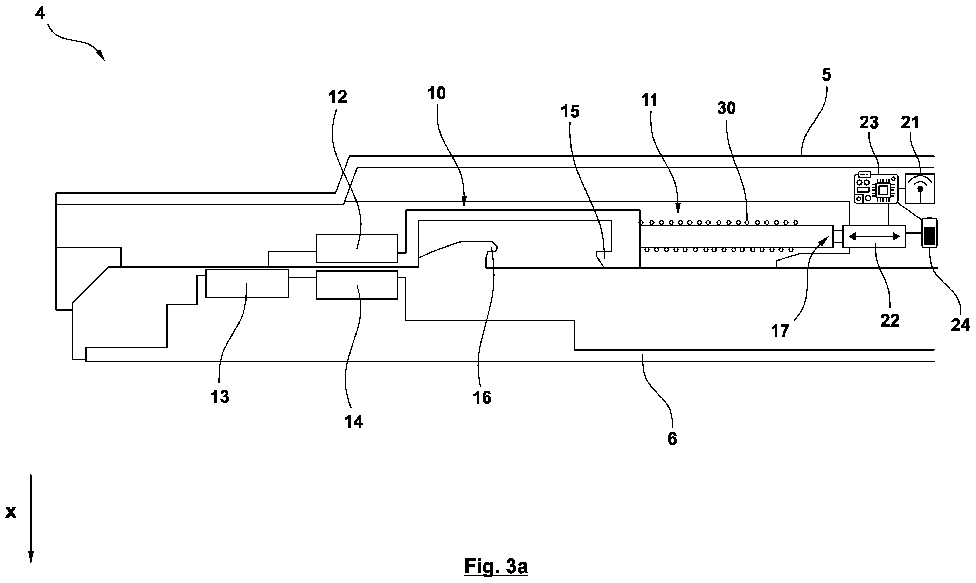

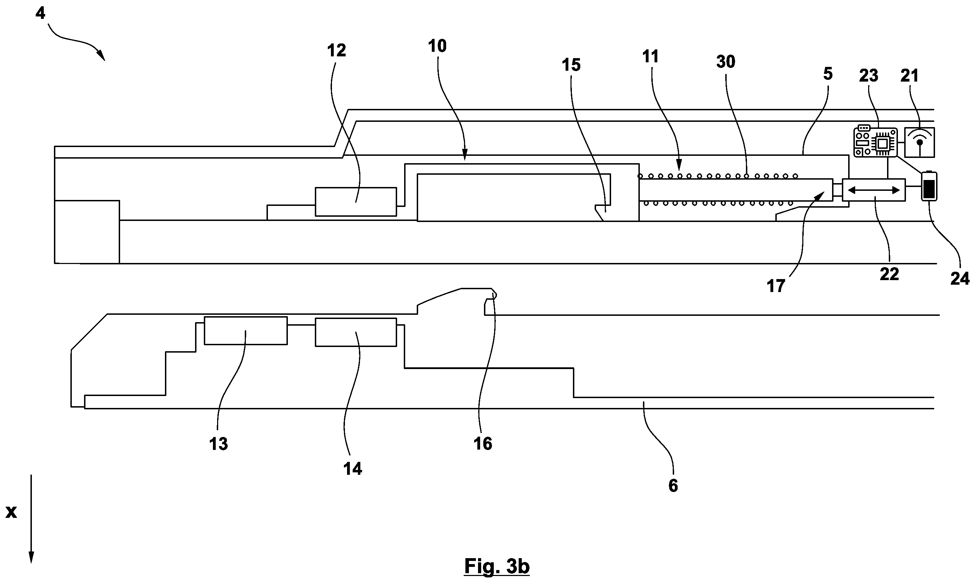

Figur 3 zeigt eine Sortieranordnung 1000 mit einer ersten Ausführungsform des erfindungsgemäßen Hängeförderers 100. Dieser verzichtet gegenüber dem in Figur 2 gezeigten Hängeförderer 100 keinen dynamischen Batch-Puffer 302, keine Sortiermatrix 304, keinen Taschenpuffer 305 und keine Packstationen 306 zum sequentiellen Entladen der Taschen 1 auf. Stattdessen ist ein Sortierzielmodul 330 vorgesehen, welches unmittelbar den Beladestationen 303 und dem dynamischen Puffer 301 nachgeschaltet ist. Das Sortierzielmodul 330 stellt einen Förderstreckenabschnitt bereit, entlang welches eine Mehrzahl Sortierziele 312 positioniert sind, welche beispielsweise durch Mittel zum Aufnehmen der Einzelartikel 320 bereitgestellt sein können, wie Behälter oder Kartons jedweder Art, beispielsweise Rollcontainer/ Container etc., aber auch AGV mit Ladefläche, Förderbänder usw.. Entlang dieses Förderstreckenabschnitts werden die Taschen 1 entlanggeführt, bis diese ein vorbestimmtes Sortierziel312 erreichen und an dieser die geladenen Artikel 320 entladen. Sobald sämtliche Taschen 1 eines Auftrags das für diesen zugewiesene Sortierzielpassiert haben und der jeweilige Tascheninhalt an dieser entleert wurde, wird der entsprechende Behälter mittels eines autonomen mobilen Roboters 313 weggefahren und ein neuer Leerbehälter an dem Sortierziel312 positioniert. Dadurch, dass gleichzeitig eine Vielzahl von Sortierzielen 312 vorgesehen ist und jedes Sortierziel312 von jeder der Taschen 1 passiert wird, kann auf eine vorherige Sortierung und Sequenzierung der Taschen 1 vollständig verzichtet werden. Mittels des erfindungsgemäßen, in jede Tasche integrierten, Taschenöffnungsmechanismus ist es möglich, die Taschen 1 durch entsprechende Ansteuerung an jeder beliebigen Stelle entlang der Förderstrecke des Sortierzielmoduls 330 zu öffnen. Selbstverständlich ist der Bereich zum Öffnen der Taschen nicht auf das Sortierzielmodul 330 beschränkt, sondern das Öffnen kann an jedem beliebigen Ort entlang des Hängeförderers erfolgen. Über einen dem Sortierzielmodul 330 nachgeschalteten Leertaschenpuffer werden die Taschen 1 entsprechend zu der in Figur 1 gezeigten Anordnung wieder der Beladung zur Verfügung gestellt.

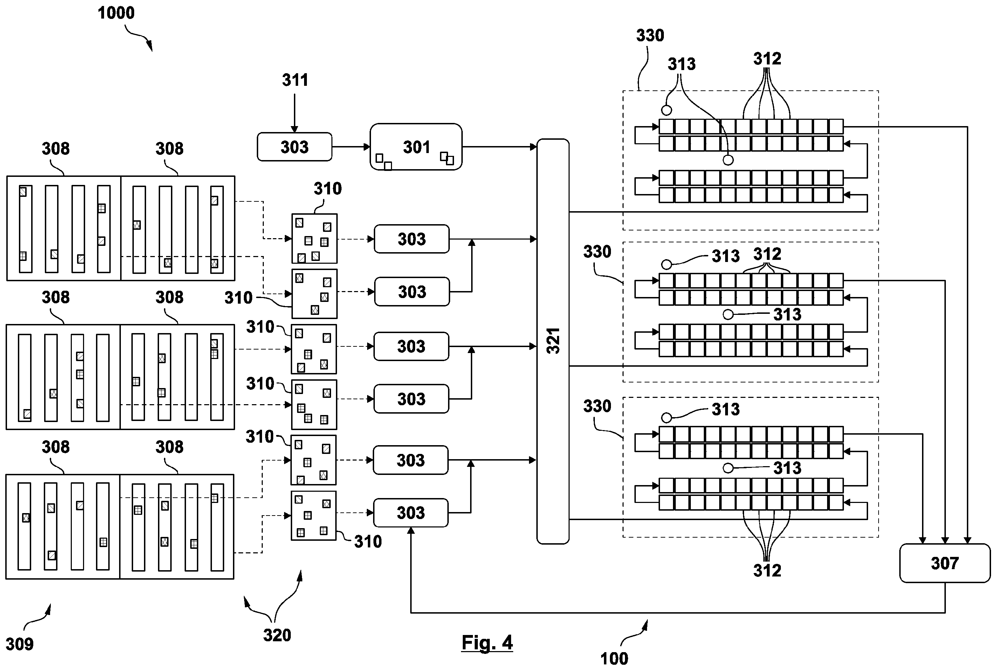

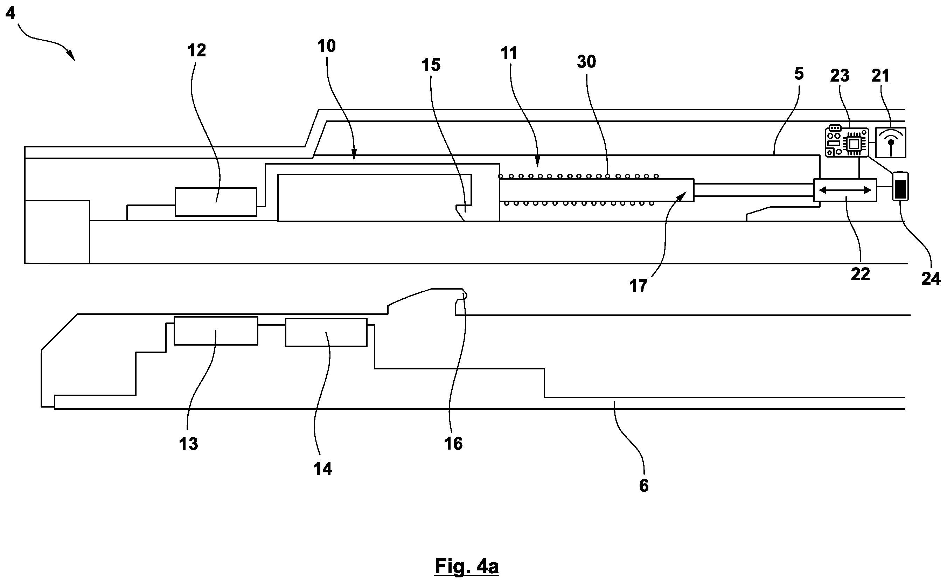

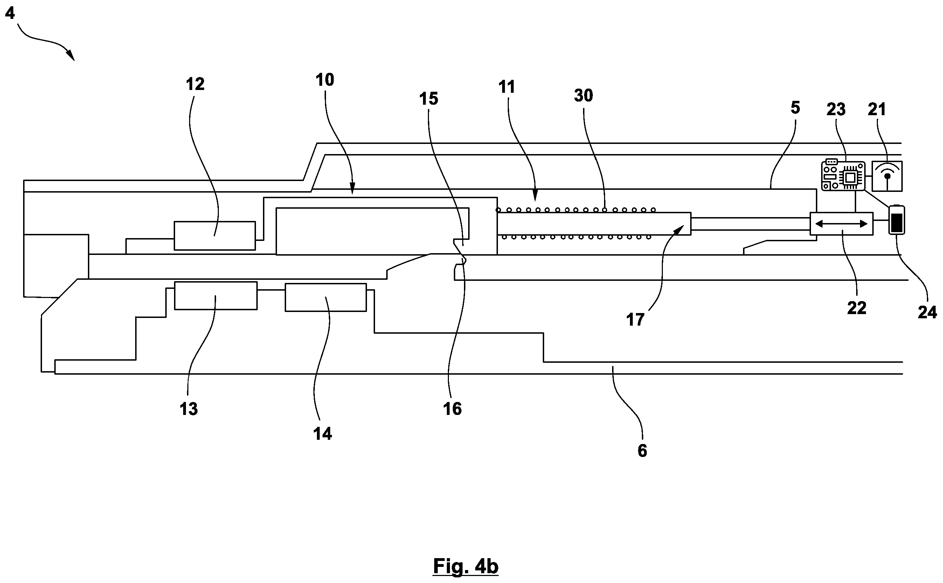

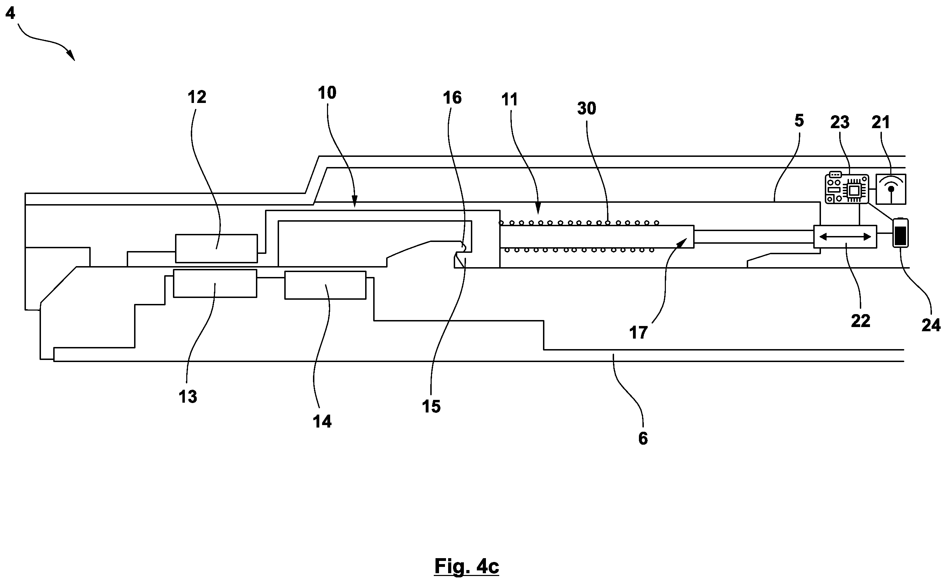

Die in Figur 4 gezeigte Anordnung 1000 ist eine gegenüber der Anordnung aus Figur 3 hochskalierte Anordnung, welche zum Verarbeiten einer demgegenüber um den Faktor 3 größeren Taschenanzahl eingerichtet ist. Der wesentliche Unterschied besteht zum einen darin, dass die dargestellte Anordnung drei separate Sortierzielmodule 330 mit jeweiligem Förderstreckenabschnitt aufweist, und zum anderen darin, dass den drei parallelen Sortierzielmodulen 330 eine Zuordnungsmatrix 321 vorgeschaltet ist, über welche die Taschen 1 in das vorgesehene Sortierzielmodul 330 ausgeschleust werden. Die Zuordnungsmatrix 321 ist unmittelbar den Beladestationen 303 und dem dynamischen Puffer 301 nachgeschaltet und weist eine entsprechende Anzahl an Eingängen auf und für jedes der Sortierzielmodule 330 einen separaten Ausgang auf.

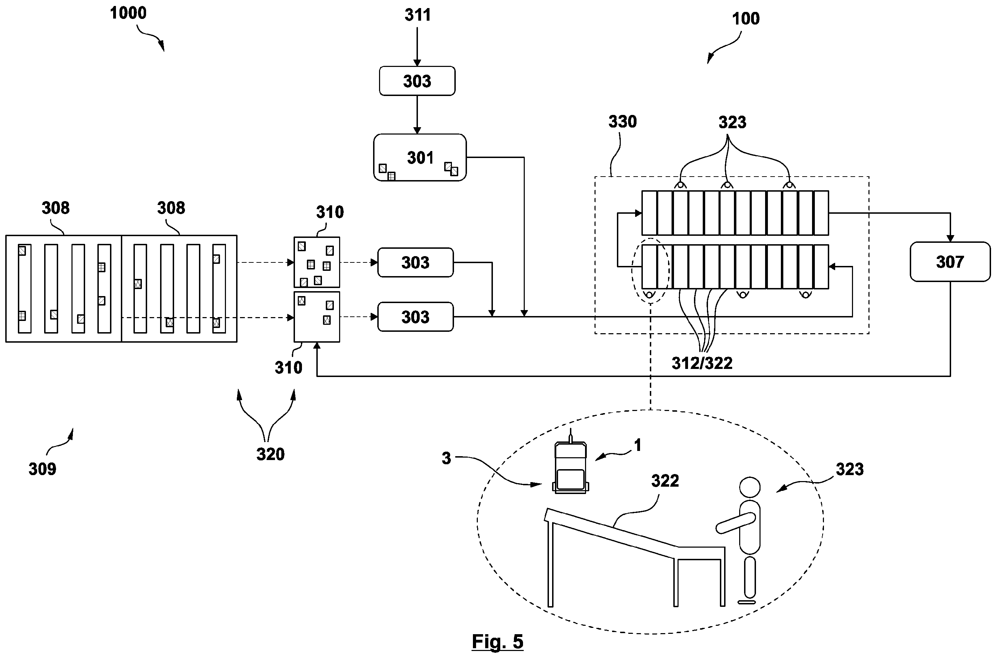

Das in Figur 5 gezeigte Sortierzielmodul 330 weist gegenüber den in den Figuren 3 und 4 gezeigten Sortierzielmodulen 330 den Unterschied auf, dass bei diesem die Sortierziele 312 nicht durch Behälter gebildet sind, in welche das transportierte Fördergut unmittelbar abgegeben wird, sondern durch jeweilige Rutschen 322, auf welche die Einzelartikel 320 abgeworfen werden und entlang welcher die Artikel in Richtung eines manuell bedienten Packplatzes herabrutschen. Alternativ können auch anstelle oder ergänzend zu den Rutschen Zwischenspeicher vorgesehen sein, in welchen die Artikel, beispielsweise Pakete oder Boxen zwischengespeichert werden können. Die dort ankommenden Artikel 320 werden am Packplatz durch einen Sortierarbeiter 323 auftragsgemäß verpackt. Es kann vorgesehen sein, dass jeder Sortierarbeiter 323 einer Mehrzahl von Rutschen 322 zugewiesen ist. Ferner kann vorgesehen sein, dass an jeder der Rutschen ein Signalmittel, beispielsweise eine grün aufleuchtende Lampe, installiert ist, mittels welchem ein Sortierarbeiter 323 darauf aufmerksam gemacht werden kann, dass sämtliche Artikel 320 eines Auftrags an der vorbestimmten Rutsche 322 angekommen sind.

Die Figur6a zeigt eine Gesamtansicht einer Fördertasche 1, Figur 6b eine Detailansicht A einer Kupplung 4 eines Taschenbodens der Fördertasche aus Figur 6a. Die Tasche 1 weist zwei Seitenwände 2 auf, die am unteren Ende zu einem Taschenboden 3 miteinander verbunden sind und am oberen Ende durch einen Bügel 7 gehalten sind, welcher zum einen eine Beladeöffnung 9 bereitstellt und zum anderen zum Aufhängen der Tasche 1 an einem Rollcarrier 8 zum Bewegen entlang einer Schiene des Hängeförderers 100 aufweist. Am unteren Ende jeder der Seitenwände 2 ist jeweils eine der Kupplungshälften 5 befestigt, welche mittels zweier Stellmechaniken 10 lösbar miteinander verrastet sind. Mittig in einer der Kupplungshälften 5 zwischen den beiden Stellmechaniken 20 ist ein fernsteuerbares Betätigungsmittel 20 angeordnet, welches einen Empfänger 21 zum Erhalten eines Funksignals zum Erhalten eines Öffnungssignals, einen Aktor 22 zum Betätigen der linken und einen Aktor 22 zum Betätigen der rechten Stellmechanik sowie ein mit dem Empfänger 21 und den Aktoren 22 jeweils verbundenes Steuergerät 23 aufweist. Das Steuergerät ist dazu eingerichtet, bei Erhalt des Funksignals durch den Empfänger 21 die beiden Aktoren 22 so anzusteuern, dass durch diese die jeweiligen Stellmechaniken 10 betätigt und der Taschenboden 3 geöffnet wird.

Die Figuren 7a bis 8c zeigen eine Kupplung 4, welche für die ferngesteuerte Entriegelung geeignet ist. Die Kupplung 4 kann beispielsweise an einer Tasche 1 der Anordnung gemäß Figur 6 im Bodenbereich 3 angeordnet sein und die beiden gegenüberliegenden und senkrecht zur Förderrichtung X ausgerichteten Seitenwände 2 der Tasche miteinander verbinden. Der Magnetschieber 11 kann eine mechanische Vorspannung in die in der Figur 8c gezeigte Schließposition aufweisen. Dazu ist bei der Ausführungsform gemäß Figur 6 eine Spiralfeder 30 vorgesehen, die in der den Magnetschieber 11 aufweisenden Kupplungshälfte 5 aufgenommen ist und im Innern des Gehäuses der Kupplungshälfte 5 an einer Gehäusewand abgestützt ist, durch welche sich der Magnetschieber mit einem Führungszapfen hindurcherstreckt. Die Feder kann alternativ auch im Aktor selbst verbaut sein. Die Kupplungshälften 5, 6 weisen magnetische Elemente 12, 13, 14 auf. Vorzugsweise sind sämtliche magnetischen Elemente 12, 13, 14 als Permanentmagnete ausgebildet. Insbesondere das Magnetelement 13 kann jedoch auch als ein ferromagnetisches Element ausgebildet sein, etwa ein eisenhaltiges Metall aufweisen. In der in Figur 8c gezeigten Schließposition ist der Magnetschieber 11 mit seinem Betätigungsende 17 um einen maximalen Verstellweg vom Aktor 22 beabstandet, um welchen das Betätigungsende 17 zwischen der Schließposition und der Freigabeposition verstellbar ist. In der Schließposition greift der Haken 15 des Magnetschiebers 11 in die hinterschnittige Hakenaufnahme 16 ein, wobei die hinterschnittige Aufnahme 16 mit einem Vorsprung, welche den von dem Haken 15 hintergriffenen Hinterschnitt bildet, den Haken 15 untergreift und an dem Haken 15 anliegt, sodass die in Figur 8c gezeigte Schließposition der Stellmechanik 10 reproduzierbar definiert ist. In der in Figur 7a gezeigten Freigabeposition des Magnetschiebers 11 ist dieser dem Aktor 22 maximal angenähert, so dass der Haken 15 der ersten Kupplungshälfte 5 und die hinterschnittige Hakenaufnahme 16 der zweiten Kupplungshälfte 6 voneinander beabstandet und außer Eingriff gebracht sind so dass die Kupplungshälften 5, 6 in bzw. entgegen der Förderrichtung X voneinander gelöst werden können. Zum Überführen des Magnetschiebers 11 zieht der im gezeigten Beispiel als ziehender Hubmagnet ausgebildete Aktor 22 den Magnetschieber 11 entgegen der Federkraft der Rückstellfeder 30 aus der Schließposition von der hinterschnittigen Hakenaufnahme 16 weg, bezogen auf die Darstellung nach rechts. Selbstverständlich kann der Aktor 22 auch als drückender Hubmagnet ausgebildet sein, wobei die Ausrichtung des Hakens 15 und der Hakenaufnahme 16 sowie die Ausrichtung der Magneten 12-14 entsprechend umgekehrt angeordnet wäre. Zum Ansteuern des Aktors 22 ist ein Steuergerät 23 vorgesehen, welches mit einem Empfänger 21 verbunden ist bzw. diesen aufweist. Ferner ist ein elektrischer Energiespeicher 24 wie beispielsweise ein Akku vorgesehen, um das Steuergerät 23, den Empfänger 21 und den Aktor 22 mit Energie zu versorgen. Sobald der Empfänger 21 per Funk ein Signal zum Öffnen des Taschenbodens 3 erhält, wird dieses an das Steuergerät 23 übermittelt, welches daraufhin den Aktor 22 zum Überführen des Magnetschieber 11 von der Schließposition in die Freigabeposition ansteuert.

Für die Bereitstellung einer Abstoßkraft zwischen den beiden Kupplungshälften 5, 6 in der in Figur 7a gezeigten Freigabeposition der Stellmechanik 10, können die magnetischen Elemente 12 und 14 jeweils als Permanentmagnet ausgebildet sein und sich mit identischen Polen gegenüberstehen, sodass die beiden Kupplungshälften 5, 6 voneinander abgestoßen werden. Da in der in der Figur 7a gezeigten Freigabeposition nicht nur die beiden gleichgepolten Permanentmagneten 12, 14 fluchtend einander gegenüberstehen, sondern darüber hinaus auch der Haken 15 aus dem Hinterschnitt der hinterschnittigen Aufnahme 16 herausgelöst ist, können die beiden Kupplungshälften 5, 6 voneinander abgelöst werden, was in Figur 7b gezeigt ist. Im vorliegenden Fall kann insbesondere die den Haken 15 aufweisende zweite Kupplungshälfte 6 aus einer Formschlussaufnahme der ersten Kupplungshälfte 5 herausgelöst werden. Da in der Freigabeposition gemäß den Figuren 3a und 3b die gleichgepolten Permanentmagnete 12, 14 in der Flucht gegenüberstehen, während der Abstand zwischen den sich anziehenden, entgegengesetzt gepolten magnetischen Elementen 12, 13 gegenüber der Schließposition (siehe Figur 8c) vergrößert ist, überwiegt die Abstoßung zwischen den Permanentmagneten 12, 14 gegenüber einer gegebenenfalls auch in der Freigabeposition gemäß den Figuren 3a und 3b noch verbleibenden, geringen Anziehungskraft zwischen den magnetischen Elementen 12 und 13.

Nach dem Ablösen der beiden Kupplungshälften 5, 6 voneinander kann die Stellmechanik 10, insbesondere der Magnetschieber 11, wieder die Schließposition einnehmen, wobei er diese Schließposition aufgrund seiner Vorspannung in die Schließposition aufgrund beispielsweise der Rückstellfeder 30 selbsttätig einnimmt. Dies führt dazu, wie in den Figuren 4a und 4b gezeigt ist, dass die entgegengesetzt gepolten magnetischen Elemente 12 und 13 wieder in die Flucht gebracht werden, wobei sie selbst bei der in Figur 8a gezeigten, teilweise beabstandeten Position aufgrund der Anziehungskraft zwischen den magnetischen Elementen 12 und 13 eine Zentrierung und weitere Annäherung zueinander erfahren, wie dies in Figur 8b gezeigt ist. Die Ausrichtung der Kupplungshälften 5, 6 zueinander, wie sie in Figur 8a gezeigt ist, kann beispielsweise der Ausgangszustand sein, welche die beiden Kupplungshälften 5, 6 unmittelbar nach dem Entladevorgang einnehmen, beispielsweise nach dem Entladen an einem Entladeort 200 in einen Rollcontainer 201, wie in Figur 2 gezeigt ist.

Die Seitenwände 2 der Tasche 1 können beispielsweise aus einem biegeschlaffen Textilmaterial bestehen, sodass die Kupplungshälften 5, 6 die Tasche wie ein Gewicht im Bodenbereich der Seitenwände 2 in die Vertikale bringen, wobei die beiden Seitenwände 2 beispielsweise aufgrund einer ebenfalls im Wesentlichen vertikalen Anordnung eines Öffnungsbügels 7 am oberen Ende der Tasche 1 bereits weitestgehend einander angenähert sind. Ein dann noch verbleibender Restabstand zwischen den Kupplungshälften 5, 6 wie er in Figur 8a gezeigt ist, kann mit Hilfe der magnetischen Anziehungskraft zwischen den magnetischen Elementen 12, 13 überbrückt werden, sodass die beiden Kupplungshälften 5, 6 die in den Figuren 4a bis 4c gezeigte Annäherung und Verrastung erfahren.

Nachdem die Tasche aufgrund der magnetischen Anziehungskraft zwischen den magnetischen Elementen 12 und 13 soweit einander angenähert sind, sodass der Haken 15 der ersten Kupplungshälfte 5 mit einer Anlaufschräge an einer korrespondierenden Anlaufschräge an einem Hinterschnitt der hinterschnittigen Aufnahme 16 der zweiten Kupplungshälfte 6 zur Anlage kommt, kann aufgrund des in dieser Position verbleibenden, geringen Restabstandes zwischen der in Figur 8b gezeigten Position und der finalen Schließposition gemäß Figur 8c die Anziehungskraft zwischen den magnetischen Elementen 12 und 13 ausreichen, um unter Überwindung der Vorspannung des Magnetschiebers 11 in seine in Figur 8a gezeigten Schließposition der Magnetschieber 11 zumindest soweit aus der Schließposition in Richtung der Freigabeposition, das heißt auf die Darstellung bezogen nach rechts, verlagert wird, dass der Haken 15 mit seiner Hakenspitze den Hinterschnitt der hinterschnittigen Aufnahme 16 hintergreifen kann, wie dies in Figur 8c gezeigt ist, woraufhin der Magnetschieber 11 dann wieder aufgrund der mechanischen Vorspannung in die in Figur 8c gezeigte Schließposition überführt wird. In der in Figur 8c gezeigten vollständigen Verriegelung der beiden Kupplungshälften 6 aneinander sind die beiden komplementär gepolten magnetischen Elemente 12, 13 maximal angenähert, während zwischen den gleichgepolten Magneten 12 und 14 ein lateraler Abstand besteht, welcher aufgrund der senkrecht zur Polfläche propagierenden Magnetfeldlinien ausreichend ist, um eine Abstoßung zwischen den Magneten 12, 14 auf ein zulässiges Mindestmaß zu verringern.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Tasche
- 2: Seitenwände
- 3: Taschenboden
- 4: Kupplung
- 5: Kupplungshälfte
- 6: Kupplungshälfte
- 7: Bügel
- 8: Rollcarrier
- 9: Beladeöffnung
- 10: Stellmechanik
- 11: Magnetschieber
- 12: Erstes magnetisches Element
- 13: Zweites magnetisches Element
- 14: Drittes magnetisches Element
- 15: Haken
- 16: Hakenaufnahme
- 17: Betätigungsende
- 20: Betätigungsmittel
- 21: Empfänger
- 22: Aktor
- 23: Steuergerät
- 24: elektrischer Energiespeicher
- 30: Rückstellfeder
- 40: Ansteuerungseinrichtung
- 50: Taschenverfolgungseinrichtung
- 100: Hängeförderer
- 101: Förderschiene
- 102: Weiche
- 103: Schrägförderer
- 104: Entladearbeitsplatz
- 105: Stauförderer
- 106: Überfüllsensor
- 107: Transferförderer
- 108: Übergang Transferförderer auf Stauförderer
- 200: Frei bestimmbarer Entladeort
- 201: Rollcontainer
- 301: dynamischer Puffer
- 302: dynamischer Batch-Puffer
- 303: Beladestation
- 304: Sortiermatrix
- 305: Packpuffer
- 306: Packstation
- 307: Leertaschenpuffer
- 308: Kommissionierer
- 309: Lager
- 310: Kommissionierbereich
- 311: Retouren
- 312: Sortierziel
- 313: autonomer mobiler Roboter
- 320: Wareneinheit
- 321: Zuordnungsmatrix
- 322: Rutsche
- 323: Arbeiter
- 330: Sortierzielmodul
- A: Vergrößerungsausschnitt
- X: Förderrichtung

## Patentansprüche

1. Hängeförderer (100) für das Zusammenstellen von Artikeln (320) zu Sortieraufträgen,
mit mehreren entlang einer Förderstrecke des Hängeförderers (100) geführten Transporttaschen (1) zum Aufnehmen von Artikeln (320), wobei die Transporttasche (1) zwei Seitenwände (2) aufweist, die an einem Boden (3) der Transporttasche (1) lösbar miteinander verbunden sind, wobei die Transporttasche (1) zumindest eine Stellmechanik (10) zum Lösen der am Boden verbundenen Seitenwände (2) voneinander zum Ausbilden einer Entladeöffnung aufweist;
mit mindestens einer Beladestation (303) zum Beladen der Transporttaschen (1) mit mindestens einem Artikel (320),
mit einem Sortierzielmodul (330), welches einen Förderstreckenabschnitt mit mehreren daran angeordneten Sortierzielen (312) zum jeweiligen dortigen Abladen eines Sortierauftrags aufweist;
mit einer Steuereinrichtung mit einem Speicher, in welchem für die Transporttasche (1) und/oder den zumindest einen in der Transporttasche (1) befindlichen Artikel (320) ein Soll-Sortierziel zum Entladen der Transporttasche (1) hinterlegt ist;
wobei der Hängeförderer (100) eine Positionsbestimmungseinrichtung (50) zum Bestimmen der Ist-Position von zumindest einer Transporttasche (1) entlang des Förderstreckenabschnitts aufweist , wobei die Transporttasche (1) zum selbsttätigen Entladen von Artikeln (320) eingerichtet ist ; **dadurch gekennzeichnet, dass** der Boden (3) mittels eines in der Transporttasche (1) angeordneten Betätigungsmittels öffenbar ist und so angesteuert ist, dass bei Übereinstimmung der Ist-Position mit dem Soll-Sortierziel der zumindest eine in der Transporttasche (1) enthaltene Artikel (320) selbsttätig, insbesondere ohne ein von extern auf die Transporttasche (1) einwirkendes mechanisches Eingreifen, entladen wird, indem das Betätigungsmittel dazu eingerichtet ist, in Reaktion auf eine seitens der Steuereinrichtung ausgesendete Taschenöffnungsinformation die zumindest eine Stellmechanik (10) so zu betätigen, dass der Boden (3) geöffnet wird.

2. Hängeförderer (100) nach Anspruch 1, wobei die Transporttasche (1) eine Drahtloskommunikationsschnittstelle (21) aufweist, über welche die Transporttasche (1) zum Entladen des zumindest einen Artikel seitens der Steuereinrichtung angesteuert ist.

3. Hängeförderer (100) nach einem der Ansprüche 1 oder 2, wobei die Transporttasche (1) einen elektrischen Energiespeicher (24), wie beispielsweise einen Akku oder einen Kondensator, zum Betreiben der in der Transporttasche (1) angeordneten elektrischen und elektronischen Komponenten aufweist.

4. Hängeförderer (100) nach einem der vorangehenden Ansprüche, wobei die zumindest eine Transporttasche (1) eine Kennung aufweist, welche im Speicher der Steuereinrichtung hinterlegt ist, wobei die Steuereinrichtung zum temporären Speichern einer Zuordnung der Kennung zu dem zumindest einen in der Transporttasche befindlichen Artikel eingerichtet ist.

5. Hängeförderer (100) nach einem der vorangehenden Ansprüche, wobei an den Sortierzielen (312) Aufnahmebehälter (201) positioniert sind, in welche die Artikel (320) aus den Transporttaschen (1) abgegeben werden können.

6. Hängeförderer (100) nach Anspruch wobei die Aufnahmebehälter (201) jeweils eine Kennung, beispielsweise **gekennzeichnet durch** einen RFID-Chip, ein Funkmodul und/oder einen Barcode, aufweisen, welche im Speicher der Steuereinrichtung hinterlegt sind und die Steuereinrichtung dazu eingerichtet ist, die jeweiligen Soll-Sortierziele automatisch anhand der Abstellorte der Aufnahmebehälter einzustellen.

7. Hängeförderer (100) nach einem der Ansprüche 5 oder 6, wobei die Aufnahmebehälter (201) beziehungsweise die Rollcontainer mit autonomem mobilen Roboter und/oder Schienenführung beziehungsweise die autonomen mobilen Roboter mit Aufnahmebehälter in Bewegung sind, und der Hängeförderer (100) die Aufnahmebehälter (201) für das Entladen der Taschen (1) mit einer Relativgeschwindigkeit passiert.

8. Hängeförderer nach Anspruch 7, wobei die Bewegungsrichtungen des Hängeförderers (100) und der Aufnahmebehälter (201) im Wesentlichen gleich sind und der Hängeförderer (100) mit einer größeren Geschwindigkeit bewegt ist als die Aufnahmebehälter (201), so dass die entladenen Artikel gezielt in die vorgesehenen Aufnahmebehälter (201) abgeworfen werden können.

9. Hängeförderer (100) nach einem der vorangehenden Ansprüche, bei dem das Sortierzielmodul (330) mehrere autonome mobile Roboter (313) zum Entfernen eines einen vollständigen Auftrag aufweisenden Aufnahmebehälters (201) von einem jeweiligen Sortierziele (312) und zum Ersetzen dieses durch einen leeren Aufnahmebehälter (201) aufweist.

10. Hängeförderer (100) nach einem der Ansprüche 1 bis 4, wobei die Sortierziele (312) als manueller Arbeitsplatz ausgebildet sind und jeweils eine Rutsche (322) aufweisen, auf welche die Artikel (320) aus den Transporttaschen (1) abgeladen werden können und entlang welcher die Artikel (320) in Richtung eines Arbeitsbereichs des manuellen Arbeitsplatzes rutschen können.

11. Hängeförderer (100) nach einem der vorangehenden Ansprüche, welcher mehrere parallele Sortierzielmodule (330) und ferner eine den Sortierzielmodulen (330) vorgeschaltete Zuordnungsmatrix (321) aufweist, welche dazu eingerichtet ist, beladene Transporttaschen (1) in einer beliebigen Reihenfolge aufzunehmen und die beladenen Transporttaschen (1) definiert an ein einem einer jeweiligen Transporttasche (1) zugeordneten Sortierziel (312) aufweisendes Sortierzielmodul (330) abzugeben.

12. Hängeförderer (100) nach einem der vorangehenden Ansprüche, wobei die Anordnung des die Sortierziele (312) aufweisenden Förderstreckenabschnitts mäanderförmig ist, und die Sortierziele (312) jeweils von zumindest einer Seite durch einen autonomen mobilen Roboter (313) zugänglich sind.

13. Verfahren zum Betreiben eines Hängeförderers (100) zum Zusammenstellen von Artikeln (320) zu Sortieraufträgen, aufweisend die Schritte:
Definieren eines an einem verfügbaren Soll-Sortierziels eines Sortierzielmoduls (330) abzuladenden Sortierauftrags, welcher aus zumindest einem Artikel (320) besteht, wobei das Sortierzielmodul (330) einen Förderstreckenabschnitt mit mehreren daran angeordneten Sortierzielen (312) zum jeweiligen dortigen Abladen eines Sortierauftrags aufweist;
Beladen zumindest eines Artikels (320) eines Sortierauftrags in eine Transporttasche (1) des Hängeförderers (100), wobei die Transporttasche (1) zum selbsttätigen Entladen des oder der Artikel (320) eingerichtet ist, wobei die Transporttasche (1) einen mittels eines in der Transporttasche (1) angeordneten Betätigungsmittels öffenbaren Boden (3) aufweist;
Zuordnen der den zumindest einen Artikel (320) des Sortierauftrags aufweisenden Transporttasche (1) zu dem entsprechenden Soll-Sortierziel;
Fördern der beladenen Transporttasche (1) entlang des Förderstreckenabschnitts des Sortierzielmoduls (330);
Bestimmen der Ist-Position der Transporttasche (1) entlang des Förderstreckenabschnitts mittels einer Positionsbestimmungseinrichtung (50);
Abgleichen der Ist-Position mit der Position des Soll-Sortierziels;
Ansteuern der Transporttasche (1) zum selbsttätigen Entladen des zumindest einen Artikels (320), wenn die Ist-Position mit der Position des Soll-Sortierziels übereinstimmt.

14. Verfahren nach Anspruch 13, ferner aufweisend den Schritt:
Feststellen, wenn sämtliche Artikel (320) eines Sortierauftrags an dem vorgesehenen Soll-Sortierzielabgeladen wurden; und
Ausgeben eines die Vollständigkeit des Sortierauftrags anzeigenden und das betreffende Soll-Sortierzielkennzeichnenden Signals und/oder Entfernen eines an dem Soll-Sortierzielpositionierten Aufnahmebehälters (201), in welchen die Artikel (320) abgeladen wurden, und Ersetzen des Behälters durch einen leeren Aufnahmebehälter (201) mittels eines autonomen mobilen Roboters (313) oder mittels eines Schienensystems oder manuell von einem Bediener.

15. Verfahren nach einem der Ansprüche 13 oder 14, bei welchem das Ansteuern der Transporttasche (1) zum Entladen des zumindest einen Artikels (320) von einer zentralen Steuereinrichtung des Hängeförderers (100) ausgegeben wird.

16. Verfahren nach einem der Ansprüche 13 bis 15, wobei das Ansteuern der Transporttasche (1) mittels eines drahtlos übermittelten Taschenöffnungsinformation erfolgt.

17. Verfahren nach einem der Ansprüche 13 bis 16, bei welchem zumindest zwei Sortierzielmodule (330) vorgesehen sind, wobei das Verfahren ferner die Schritte aufweist:
Zuordnen von einer ersten Mehrzahl von Sortieraufträgen zum ersten Sortierzielmodul (330) und Zuordnen von einer zweiten Mehrzahl von Sortieraufträgen zum zweiten Sortierzielmodul (330);
Einschleusen der ersten und der zweiten Mehrzahl von Sortieraufträgen in eine Zuordnungsmatrix (321);
Ausschleusen der der ersten Mehrzahl von Sortieraufträgen entsprechenden Transporttaschen (1) aus der Zuordnungsmatrix (321) zum ersten Sortierzielmodul (330) und Ausschleusen der der zweiten Mehrzahl von Sortieraufträgen entsprechenden Transporttaschen (1) aus der Zuordnungsmatrix (321) zum zweiten Sortierzielmodul (330).

18. Verfahren nach einem der Ansprüche 13 bis 17, ferner aufweisend den Schritt:
Fördern von entladenen Transporttaschen (1) in einen Taschenpuffer (307) und Bereitstellen der im Taschenpuffer (307) gespeicherten Transporttaschen (1) zum erneuten Beladen mit Artikeln (320).

## Claims

1. An overhead conveyor (100) for assembling articles (320) to form sorting orders,
comprising a plurality of transport pouches (1) guided along a conveying path of the overhead conveyor (100) for receiving articles (320), wherein the transport pouch (1) has two side walls (2) which are detachably connected to one another at a base (3) of the transport pouch (1), wherein the transport pouch (1) has at least one actuating mechanism (10) for detaching the side walls (2) connected at the base from one another to form an unloading opening;
comprising at least one loading station (303) for loading the transport pouches (1) with at least one article (320),
comprising a sorting destination module (330) which has a conveying path section with a plurality of sorting destinations (312) arranged thereon for the respective unloading of a sorting order there;
comprising a control device with a memory in which a desired sorting destination for unloading the transport pouch (1) is stored for the transport pouch (1) and/or the at least one article (320) located in the transport pouch (1);
wherein the overhead conveyor (100) has a position determining device (50) for determining the actual position of at least one transport pouch (1) along the conveyor section, wherein the transport pouch (1) is set up for automatically unloading articles (320); **characterized in that** the base (3) can be opened by means of an actuating means arranged in the transport pouch (1) and is actuated in such a way that, if the actual position corresponds to the desired sorting destination, the at least one article (320) contained in the transport pouch (1) is automatically unloaded, in particular without a mechanical intervention acting externally on the transport pouch (1), by the actuating means being set up to actuate the at least one actuating mechanism (10) in response to pouch opening information transmitted by the control device in such a way that the base (3) is opened.

2. The overhead conveyor (100) according to claim 1, wherein the transport pouch (1) has a wireless communication interface (21), via which the transport pouch (1) is actuated by the control device for unloading the at least one article.

3. The overhead conveyor (100) according to one of claims 1 or 2, wherein the transport pouch (1) has an electrical energy store (24), such as, for example, a rechargeable battery or a capacitor, for operating the electrical and electronic components arranged in the transport pouch (1).

4. The overhead conveyor (100) according to one of the preceding claims,
wherein the at least one transport pouch (1) has an identifier which is stored in the memory of the control device, wherein the control device is set up for temporarily storing an assignment of the identifier to the at least one article located in the transport pouch.

5. The overhead conveyor (100) according to one of the preceding claims,
wherein receiving containers (201), into which the articles (320) can be discharged from the transport pouches (1), are positioned at the sorting destinations (312).

6. The overhead conveyor (100) according to claim 5, wherein the receiving containers (201) each have an identifier, for example **characterized by** an RFID chip, a radio module and/or a barcode, which are stored in the memory of the control device, and the control device is set up to automatically set the respective desired sorting destinations on the basis of the storage locations of the receiving containers.

7. The overhead conveyor (100) according to one of claims 5 or 6, wherein the receiving containers (201) or the roll containers with autonomous mobile robots and/or rail guidance or the autonomous mobile robots with receiving containers are in motion, and the overhead conveyor (100) passes the receiving containers (201) at a relative speed for the unloading of the pouches (1).

8. The overhead conveyor according to claim 7, wherein the directions of movement of the overhead conveyor (100) and of the receiving containers (201) are substantially the same, and the overhead conveyor (100) is moved at a higher speed than the receiving containers (201), so that the unloaded articles can be dropped into the provided receiving containers (201) in a targeted manner.

9. The overhead conveyor (100) according to one of the preceding claims, in
which the sorting destination module (330) has a plurality of autonomous mobile robots (313) for removing a receiving container (201) having a complete order from a respective sorting destination (312) and for replacing the same by an empty receiving container (201).

10. The overhead conveyor (100) according to one of claims 1 to 4, wherein the sorting destinations (312) are configured as a manual workstation and each have a chute (322), onto which the articles (320) can be unloaded from the transport pouches (1) and along which the articles (320) can slide in the direction of a working region of the manual workstation.

11. The overhead conveyor (100) according to one of the preceding claims, which has a plurality of parallel sorting destination modules (330) and furthermore an assignment matrix (321) which is connected upstream of the sorting destination modules (330) and which is set up to receive loaded transport pouches (1) in any desired sequence and to discharge the loaded transport pouches (1) in a defined manner to a sorting destination module (330) having a sorting destination (312) assigned to a respective transport pouch (1).

12. The overhead conveyor (100) according to one of the preceding claims,
wherein the arrangement of the conveyor line section having the sorting destinations (312) is meandering, and the sorting destinations (312) are each accessible from at least one side by an autonomous mobile robot (313).

13. A method for operating an overhead conveyor (100) for assembling articles (320) to form sorting orders, having the steps:
defining a sorting order which is to be unloaded at an available target sorting destination of a sorting destination module (330) and which consists of at least one article (320), wherein the sorting destination module (330) has a conveyor line section with a plurality of sorting destinations (312) arranged thereon for the respective unloading there of a sorting order;
loading at least one article (320) of a sorting order into a transport pouch (1) of the overhead conveyor (100), wherein the transport pouch (1) is set up for the automatic unloading of the article(s) (320), wherein the transport pouch (1) has a base (3) which can be opened by means of an actuating means arranged in the transport pouch (1);
assigning the transport pouch (1) having the at least one article (320) of the sorting order to the corresponding target sorting destination;
conveying the loaded transport pouch (1) along the conveyor line section of the sorting destination module (330);
determining the actual position of the transport pouch (1) along the conveyor line section by means of a position determining device (50);
comparing the actual position with the position of the target sorting destination;
actuating the transport pouch (1) for the automatic unloading of the at least one article (320) if the actual position corresponds to the position of the target sorting destination.

14. The method according to claim 13, furthermore having the step:
determining if all the articles (320) of a sorting order have been unloaded at the provided target sorting destination; and
outputting a signal indicating the completeness of the sorting order and characterizing the relevant target sorting destination and/or removing a receiving container (201) positioned at the target sorting destination, into which the articles (320) have been unloaded, and replacing the container by an empty receiving container (201) by means of an autonomous mobile robot (313) or by means of a rail system or manually by an operator.

15. The method according to one of claims 13 or 14, in which the actuation of the transport pouch (1) for unloading the at least one article (320) is output by a central control device of the overhead conveyor (100).

16. The method according to one of claims 13 to 15, wherein the actuation of the transport pouch (1) takes place by means of wirelessly transmitted pouch opening information.

17. The method according to one of claims 13 to 16, in which at least two sorting destination modules (330) are provided, wherein the method furthermore has the steps:
assigning a first plurality of sorting orders to the first sorting destination module (330) and assigning a second plurality of sorting orders to the second sorting destination module (330);
transferring the first and the second plurality of sorting orders into an assignment matrix (321);
transferring the transport pouches (1) corresponding to the first plurality of sorting orders from the assignment matrix (321) to the first sorting destination module (330) and transferring the transport pouches (1) corresponding to the second plurality of sorting orders from the assignment matrix (321) to the second sorting destination module (330).

18. The method according to one of claims 13 to 17, furthermore having the step:
conveying unloaded transport pouches (1) into a pouch buffer (307) and providing the transport pouches (1) stored in the pouch buffer (307) for renewed loading with articles (320).

## Revendications

1. Convoyeur aérien (100) pour l'assemblage d'articles (320) en commandes de tri,
avec plusieurs sacs de transport (1) guidés le long d'un tronçon de convoyage du convoyeur aérien (100) pour recevoir des articles (320), dans lequel le sac de transport (1) présente deux parois latérales (2) qui sont reliées de manière détachable à un fond (3) du sac de transport (1), dans lequel le sac de transport (1) comprend au moins un mécanisme d'actionnement (10) pour libérer les parois latérales (2) reliées au fond l'une de l'autre afin de former une ouverture de déchargement ;
avec au moins une station de chargement (303) pour charger les sacs de transport (1) avec au moins un article (320) ;
avec un module de destination de tri (330), qui comprend un tronçon de convoyage avec plusieurs destinations de tri (312) agencées sur celui-ci pour le déchargement respectif d'une commande de tri à cet endroit ;
avec un dispositif de commande avec une mémoire, dans laquelle une destination de tri cible pour le déchargement du sac de transport (1) est stockée pour le sac de transport (1) et/ou le ou les articles (320) se trouvant dans le sac de transport (1) ;
dans lequel le convoyeur aérien (100) comprend un dispositif de détermination de position (50) pour déterminer la position réelle d'au moins un sac de transport (1) le long du tronçon de convoyage, dans lequel le sac de transport (1) est conçu pour le déchargement automatique d'articles (320) ;
**caractérisé en ce que** :
le fond (3) peut être ouvert au moyen d'un moyen d'actionnement agencé dans le sac de transport (1) et est commandé de telle sorte que, lorsque la position réelle correspond à la destination de tri cible, le ou les articles (320) contenus dans le sac de transport (1) sont déchargés automatiquement, en particulier sans intervention mécanique exteme sur le sac de transport (1), **en ce que** le moyen d'actionnement est conçu pour actionner le ou les mécanismes d'actionnement (10) de manière à ce que le fond (3) soit ouvert, en réaction à une information d'ouverture de sac émise par le dispositif de commande.

2. Convoyeur aérien (100) selon la revendication 1, dans lequel le sac de transport (1) présente une interface de communication sans fil (21), par l'intermédiaire de laquelle le sac de transport (1) est contrôlé par le dispositif de commande pour le déchargement du ou des articles.

3. Convoyeur aérien (100) selon l'une des revendications 1 ou 2, dans lequel le sac de transport (1) présente un accumulateur d'énergie électrique (24), tel qu'une batterie ou un condensateur, pour faire fonctionner les composants électriques et électroniques agencés dans le sac de transport (1).

4. Convoyeur aérien (100) selon l'une des revendications précédentes, dans lequel le ou les sacs de transport (1) ont une identification, laquelle est stockée dans la mémoire du dispositif de commande, dans lequel le dispositif de commande est conçu pour stocker temporairement une affectation de l'identification au ou aux articles se trouvant dans le sac de transport.

5. Convoyeur aérien (100) selon l'une des revendications précédentes, dans lequel des récipients de réception (201) sont positionnés aux destinations de tri (312), dans lesquels les articles (320) peuvent être déchargés des sacs de transport (1).

6. Convoyeur aérien (100) selon la revendication 5, dans lequel les récipients de réception (201) ont chacun une identification, par exemple **caractérisée par** une puce RFID, un module radio et/ou un code-barres, lesquelles sont stockées dans la mémoire du dispositif de commande et le dispositif de commande est conçu pour régler automatiquement les destinations de tri cibles respectives en fonction des emplacements de stationnement des récipients de réception.

7. Convoyeur aérien (100) selon l'une des revendications 5 ou 6, dans lequel les récipients de réception (201) ou les chariots roulants avec robot mobile autonome et/ou guidage sur rails ou les robots mobiles autonomes avec récipient de réception sont en mouvement, et le convoyeur aérien (100) passe devant les récipients de réception (201) pour le déchargement des sacs (1) avec une vitesse relative.

8. Convoyeur aérien selon la revendication 7, dans lequel les directions de mouvement du convoyeur aérien (100) et des récipients de réception (201) sont sensiblement les mêmes et le convoyeur aérien (100) est déplacé à une vitesse supérieure à celle des récipients de réception (201), de sorte que les articles déchargés peuvent être déposés de manière ciblée dans les récipients de réception (201) prévus.

9. Convoyeur aérien (100) selon l'une des revendications précédentes, dans lequel le module de destination de tri (330) a plusieurs robots mobiles autonomes (313) pour retirer un récipient de réception (201) contenant une commande complète d'une destination de tri (312) respective et pour le remplacer par un récipient de réception (201) vide.

10. Convoyeur aérien (100) selon l'une des revendications 1 à 4, dans lequel les destinations de tri (312) sont conçues comme un poste de travail manuel et ont chacune une rampe (322) sur laquelle les articles (320) peuvent être déchargés des sacs de transport (1) et le long de laquelle les articles (320) peuvent glisser en direction d'une zone de travail du poste de travail manuel.

11. Convoyeur aérien (100) selon l'une des revendications précédentes, qui présente plusieurs modules de destination de tri (330) parallèles et en outre une matrice d'affectation (321) située en amont des modules de destination de tri (330), laquelle est conçue pour recevoir des sacs de transport (1) chargés dans un ordre quelconque et pour livrer les sacs de transport (1) chargés de manière définie à un module de destination de tri (330) ayant une destination de tri (312) associée à un sac de transport (1) respectif.

12. Convoyeur aérien (100) selon l'une des revendications précédentes, dans lequel l'agencement du tronçon de convoyage présentant les destinations de tri (312) est en méandre, et les destinations de tri (312) sont chacune accessibles d'au moins un côté par un robot mobile autonome (313).

13. Procédé de fonctionnement d'un convoyeur aérien (100) pour l'assemblage d'articles (320) en commandes de tri, comprenant les étapes suivantes :
définition d'une commande de tri à décharger à une destination de tri cible disponible d'un module de destination de tri (330), laquelle est composée d'au moins un article (320), dans lequel le module de destination de tri (330) comprend un tronçon de convoyage avec plusieurs destinations de tri (312) agencées sur celui-ci pour le déchargement respectif d'une commande de tri à cet endroit ;
chargement d'au moins un article (320) d'une commande de tri dans un sac de transport (1) du convoyeur aérien (100), dans lequel le sac de transport (1) est conçu pour le déchargement automatique du ou des articles (320), dans lequel le sac de transport (1) présente un fond (3) ouvrable au moyen d'un moyen d'actionnement agencé dans le sac de transport (1) ;
affectation du sac de transport (1) contenant le ou les articles (320) de la commande de tri à la destination de tri cible correspondante ;
transport du sac de transport (1) chargé le long du tronçon de convoyage du module de destination de tri (330) ;
détermination de la position réelle du sac de transport (1) le long du tronçon de convoyage au moyen d'un dispositif de détermination de position (50) ;
comparaison de la position réelle avec la position de la destination de tri cible ;
contrôle du sac de transport (1) pour le déchargement automatique du ou des articles (320), lorsque la position réelle correspond à la position de la destination de tri cible.

14. Procédé selon la revendication 13, comprenant en outre l'étape suivante :
constatation lorsque tous les articles (320) d'une commande de tri ont été déchargés à la destination de tri cible prévue ; et
émission d'un signal indiquant l'achèvement de la commande de tri et identifiant la destination de tri cible concernée et/ou retirer un récipient de réception (201) positionné à la destination de tri cible, dans lequel les articles (320) ont été déchargés, et remplacer le récipient par un récipient de réception (201) vide au moyen d'un robot mobile autonome (313) ou au moyen d'un système de rails ou manuellement par un opérateur.

15. Procédé selon l'une des revendications 13 ou 14, dans lequel la commande du sac de transport (1) pour le déchargement du ou des articles (320) est émise par un dispositif de commande central du convoyeur aérien (100).

16. Procédé selon l'une des revendications 13 à 15, dans lequel la commande du sac de transport (1) est effectuée au moyen d'une information d'ouverture de sac transmise sans fil.

17. Procédé selon l'une des revendications 13 à 16, dans lequel au moins deux modules de destination de tri (330) sont prévus, dans lequel le procédé comprend en outre les étapes suivantes :
affectation d'une première pluralité de commandes de tri au premier module de destination de tri (330) et affecter une deuxième pluralité de commandes de tri au deuxième module de destination de tri (330) ;
introduction de la première et la deuxième pluralité de commandes de tri dans une matrice d'affectation (321) ;
évacuation des sacs de transport (1) correspondant à la première pluralité de commandes de tri de la matrice d'affectation (321) vers le premier module de destination de tri (330) et évacuer les sacs de transport (1) correspondant à la deuxième pluralité de commandes de tri de la matrice d'affectation (321) vers le deuxième module de destination de tri (330).

18. Procédé selon l'une des revendications 13 à 17, comprenant en outre l'étape suivante :
transport des sacs de transport (1) déchargés dans un tampon de sacs (307) et mettre à disposition les sacs de transport (1) stockés dans le tampon de sacs (307) pour un nouveau chargement d'articles (320).
